# EUROPEAN PATENT APPLICATION

(11) **EP 1 808 533 A1**
(43) Date of publication of application: **18.07.2007**
(21) Application number: 05793211.3
(22) Date of filing: 11.10.2005
(51) Int. Cl.: E02D 3/046, E02F 9/20, G01C 15/00, G09B 29/00, G09B 29/10, G01C 21/26, G01S 5/14

(54) **WORK MANAGEMENT DEVICE AND WORKING MACHINE WITH THE SAME**

(30) Priority: 04.11.2004 JP 2004320354
(71) Applicant: HITACHI CONSTRUCTION MACHINERY CO., LTD., Tokyo 112-0004 (JP)
(72) Inventor: HATORI, Keiji, c/o Hitachi Const. Mach. Co. Ltd., Tsuchiura-shi, Ibaraki, 3000013 (JP); OGURA, Hiroshi, c/o Hitachi Const. Mach. Co. Ltd., Tsuchiura-shi, Ibaraki, 3000013 (JP); ISHIBASHI, Hideto, c/o Hitachi Const. Mach. Co Ltd, Tsuchiura-shi, Ibaraki, 3000013 (JP); SUGAWARA, Kazuhiro, c/o Hitachi Const. Mach Co Ltd, Tsuchiura-shi, Ibaraki, 3000013 (JP); IKUTA, Masaharu, c/o Hitachi Const. Mach. Co. Ltd., Tsuchiura-shi, Ibaraki, 3000013 (JP)
(74) Representative: van Loon, C.J.J.
(86) International application number: PCT/JP2005/018690
(87) International publication number: WO 2006/048995

(57) **Abstract**

A work management system which is adaptable for various display modes demanded by an operator and which can increase working efficiency, and a working machine which is equipped with the work management system.

In a work management system for managing work situations of a working machine, the system comprises a focus selection button 110 for selectively changing over a working machine subject-display mode in which a working machine symbol 100 is displayed as a subject on a display screen 101 of a display unit and a large block 102 displayed as a work target area is moved corresponding to movement of the working machine, and a topography subject-display mode in which an optionally selected position of topography is fixedly displayed at a center of the screen and the working machine symbol 100 is moved with respect to the fixedly displayed large block 102.

## Description

### Technical Field

The present invention relates to a work management system for managing work situations of a working machine and also relates to a working machine equipped with the work management system.

### Background Art

In one known example of a work management system for managing work situations of a working machine, the position and attitude of a roller compacting vehicle is displayed on a screen inside the roller compacting vehicle in real time by utilizing a GPS unit (see, e.g., Patent Document 1). With that known technique, the roller compacting vehicle is displayed on a screen in superimposed relation to a work target area which is divisionally displayed in the form of a meshed image, and the passage frequency of the roller compacting vehicle over each of the divided zones is regarded as the rolling frequency. Thus, the work can be progressed while confirming, on the screen, the progress of the rolling work in the work target area.
Patent Document 1: JP,A 10-311022

### Disclosure of the Invention

### Problems to be Solved by the Invention

With the known technique described above, a subject to be displayed is fixed to the work target area, and a monitor screen is displayed in such a manner that a symbol representing the working machine is moved within the work target area. Therefore, unless the working machine actually enters the work target area, the working machine is not displayed on the screen. When the working machine is away from the work target area as in the case, for example, where the working machine is run to go to the work target area from an office on the day of work, the positional relationship between the working machine and the work target area cannot be confirmed on the screen. Also, when the work target area is entirely displayed in the form of meshes, a displayed image is so complicated as to raise a difficulty in confirming work situations on the screen. It is often more convenient if the work situations can be confirmed in a rough way. Thus, according to the known technique, it is difficult in some cases to confirm the current state, such as the positional relationship between the working machine and the work target area and rough work situations in the work target area, in a mode desired by an operator.

In view of the state of the art described above, an object of the present invention is to provide a work management system which is adaptable for various display modes demanded by the operator and which can increase working efficiency, and a working machine which is equipped with the work management system.

### Means for Solving the Problems

To achieve the above object, a first invention is featured in a work management system for managing work situations of a working machine, wherein the work management system comprises a radio unit for receiving correction data from a base station; GPS receivers for calculating positions of a plurality of GPS antennas, which are installed on the working machine, based on the correction data received through the radio unit and a signal from a GPS satellite; various movable-portion sensors for detecting work data of the working machine; a processing unit for calculating the progress of work in a work target area and the position and attitude of the working machine based on position data from the GPS receivers and the work data from the various movable-portion sensors; a display unit installed in a cab of the working machine, receiving a display signal from the processing unit, and displaying the progress of work in the work target area and the position and attitude of the working machine in superimposed relation; and display subject changeover means for selectively changing over a working machine subject-display mode in which a working machine symbol is displayed as a subject on a screen of the display unit and the work target area is moved corresponding to movement of the working machine, and a topography subject-display mode in which an optionally selected position of topography is fixedly displayed at a center of the screen and the working machine symbol is moved with respect to the fixedly displayed work target area.

According to a second invention, in the work management system according to the first invention, the working machine subject-display mode has the function of automatically optimizing a scaling factor of a screen display image and a focus position depending on a distance between the working machine and the work target area such that the work target area and the working machine symbol fall in the screen.

According to a third invention, the work management system according to the first or second invention further comprises scaling-factor change means for manually changing the scaling factor of the screen display image when the topography subject-display mode is selected.

According to a fourth invention, the work management system according to any one of the first to third inventions further comprises display position moving means for manually moving the optionally selected position fixed to the center of the screen when the topography subject-display mode is selected.

According to a fifth invention, the work management system according to any one of the first to fourth inventions further comprises display direction changeover means for selectively changing over an absolute azimuth display mode in which the work target area is displayed while orientation thereof is fixed with the upper side of the screen of the display unit being set correspondent to north, and a relative azimuth display mode in which the working machine symbol is displayed while orientation display unit being set correspondent to the front direction of the working machine.

According to a sixth invention, the work management system according to any one of the first to fifth inventions further comprises display area changeover means for selectively changing over a large block display mode in which the work target area is expressed by a large block given as an assembly of small blocks each made up of meshes as component units and the whole of the large block is displayed on the screen of the display unit with the small block being a unit for display, and a small block display mode in which one desired small block is displayed with the mesh being a unit for display; and mesh block moving means for, when the large block display mode is selected, optionally moving a mesh block which displays a work state of a region corresponding to one small block in the form of meshes, and displaying the work state in a desired position without making changeover to the small block display mode.

A seventh invention is featured in a work management system for managing work situations of a working machine, wherein the work management system comprises a radio unit for receiving correction data from a base station; GPS receivers for calculating positions of a plurality of GPS antennas, which are installed on the working machine, based on the correction data received through the radio unit and a signal from a GPS satellite; various movable-portion sensors for detecting work data of the working machine; a processing unit for calculating the progress of work in a work target area and the position and attitude of the working machine based on position data from the GPS receivers and the work data from the various movable-portion sensors; a display unit installed in a cab of the working machine, receiving a display signal from the processing unit, and displaying the progress of work in the work target area and the position and attitude of the working machine in superimposed relation; display area changeover means for selectively changing over a large block display mode in which the work target area is expressed by a large block given as an assembly of small blocks each made up of meshes as component units and the whole of the large block is displayed on the screen of the display unit with the small block (103) being a unit for display, and a small block display mode in which one desired small block is displayed with the mesh being a unit for display; and mesh block moving means for, when the large block display mode is selected, optionally moving a mesh block which displays a work state of a region corresponding to one small block in the form of meshes, and displaying the work state in a desired position without making changeover to the small block display mode.

An eighth invention is featured in a working machine comprising a radio unit for receiving correction data from a base station; a plurality of GPS antennas for receiving a signal from a GPS satellite; GPS receivers for calculating positions of the plurality of GPS antennas based on the correction data received through the radio unit and a signal from the GPS satellite; various movable-portion sensors for detecting work data; a processing unit for calculating the progress of work in a work target area and the current machine position and attitude based on position data from the GPS receivers and the work data from the various movable-portion sensors; a display unit installed in a cab, receiving a display signal from the processing unit, and displaying the progress of work in the work target area and the current machine position and attitude in superimposed relation; and display subject changeover means for selectively changing over a working machine subject-display mode in which a working machine symbol is displayed as a subject on a screen of the display unit and the work target area is moved corresponding to movement of a machine body, and a topography subject-display mode in which an optionally selected position of topography is fixedly displayed at a center of the screen and the working machine symbol is moved with respect to the fixedly displayed work target area.

A ninth invention is featured in a working machine comprising a radio unit for receiving correction data from a base station; a plurality of GPS antennas for receiving a signal from a GPS satellite; GPS receivers for calculating positions of the plurality of GPS antennas based on the correction data received through the radio unit and a signal from the GPS satellite; various movable-portion sensors for detecting work data; a processing unit for calculating the progress of work in a work target area and the current machine position and attitude based on position data from the GPS receivers and the work data from the various movable-portion sensors; a display unit installed in a cab, receiving a display signal from the processing unit, and displaying the progress of work in the work target area and the current machine position and attitude in superimposed relation; display area changeover means for selectively changing over a large block display mode in which the work target area is expressed by a large block given as an assembly of small blocks each made up of meshes as component units and the whole of the large block is displayed on the screen of the display unit with the small block being a unit for display, and a small block display mode in which one desired small block is displayed with the mesh being a unit for display; and mesh block moving means for, when the large block display mode is selected, optionally moving a mesh block which displays a work state of a region corresponding to one small block in the form of meshes, and displaying the work state in a desired position without making changeover to the small block display mode.

### Advantages of the Invention

According to the present invention, since display can be changed depending on the various display modes demanded by the operator, the working efficiency can be increased.

### Brief Description of the Drawings

Fig. 1 is a schematic view showing, along with a system block diagram of a work management system according to one embodiment of the present invention, an external appearance of a working machine which is equipped with the work management system.
Fig. 2 shows one example of a work monitoring screen of the work management system according to the one embodiment of the present invention.
Fig. 3 is an explanatory view for explaining a work target area to be managed by the work management system according to the one embodiment of the present invention.
Fig. 4 shows one example of the work monitoring screen of the work management system according to the one embodiment of the present invention.
Fig. 5 shows one example of the work monitoring screen of the work management system according to the one embodiment of the present invention.
Fig. 6 is an illustration for explaining the relationship between the focus position of a virtual display camera on software and a display screen.
Fig. 7 is a table showing a summary of an object file stored in a storage unit.
Fig. 8 shows one example of the work monitoring screen of the work management system according to the one embodiment of the present invention.
Fig. 9 shows one example of the work monitoring screen of the work management system according to the one embodiment of the present invention.
Fig. 10 shows one example of the work monitoring screen of the work management system according to the one embodiment of the present invention.
Fig. 11 is a table showing management information of a stored mesh status file.
Fig. 12 is an illustration showing status information of meshes in the whole of a large block.
Fig. 13 shows, in the form of data, the status information of the meshes in the whole of the large block.
Fig. 14 is a table showing the correspondence relationship between definition and an identification color per status (state) of a small block in a small-block identification display area.
Fig. 15 is an explanatory view for explaining an example of the operation when a mesh block is moved in units of half the small block.
Fig. 16 is an explanatory view for explaining an example of the operation when the mesh block is moved in units of half the small block.
Fig. 17 is an explanatory view for explaining an example of the operation when the mesh block is moved in units of half the small block.
Fig. 18 is an explanatory view for explaining an example of the operation when the mesh block is moved in units of half the small block.
Fig. 19 is an explanatory view for explaining an example of the operation when the mesh block is directly moved to a desired small block.
Fig. 20 is an explanatory view for explaining an - example of the operation when the mesh block is directly moved to a desired small block.
Fig. 21 is an explanatory view for explaining an example of the operation when the mesh block is directly moved to a desired small block.
Fig. 22 is an explanatory view for explaining an example of the operation when the mesh block is directly moved to a desired small block.
Fig. 23 is a flowchart schematically showing an overall flow of the system operation of the work management system according to the one embodiment of the present invention.
Fig. 24 is a flowchart showing the processing procedure in a system startup process of the work management system according to the one embodiment of the present invention.
Fig. 25 is a flowchart showing the processing procedure in a work area setting process of the work management system according to the one embodiment of the present invention.
Fig. 26 is a flowchart showing the processing procedure in a focus setting process of the work management system according to the one embodiment of the present invention.
Fig. 27 is a flowchart showing details of a display changing process, which is executed after receiving a movement trigger, of the work management system according to the one embodiment of the present invention.
Fig. 28 is a flowchart showing details of a display changing process, which is executed after receiving a scaling-factor change trigger, of the work management system according to the one embodiment of the present invention.
Fig. 29 is a flowchart showing the processing procedure in a screen upward-direction setting process of the work management system according to the one embodiment of the present invention.
Fig. 30 is a flowchart showing the processing procedure in a display area setting process of the work management system according to the one embodiment of the present invention.
Fig. 31 is a flowchart showing the processing procedure in a work data recording/updating process of the work management system according to the one embodiment of the present invention.

### Reference Numerals

- 10: base station
- 20: GPS satellite
- 30: working machine
- 32: cab
- 46, 47: GPS antennas
- 50: work management system
- 51: radio unit
- 53, 54: GPS receivers
- 55: movable-portion sensors
- 63: display unit
- 64: processing unit
- 100: working machine symbol
- 101: display screen
- 102: large block
- 103: small block
- 104: mesh
- 105: mesh block
- 110: focus selection button
- 112: screen upward-direction selection button
- 113: display area selection button
- 115: scale-up/down button
- 116: movement button

### Best Mode for Carrying Out the Invention

The present invention is suitable for enabling, e.g., an operator to manage and confirm a work state in each position within a work target area for various kinds of work including mine removal, ground amendment, topographic change, roller compacting, and dredging.

One embodiment of the present invention will be described below by referring to the drawings in connection with, for example, the case where the present invention is applied to the mine removing work.

### <Overall Construction>

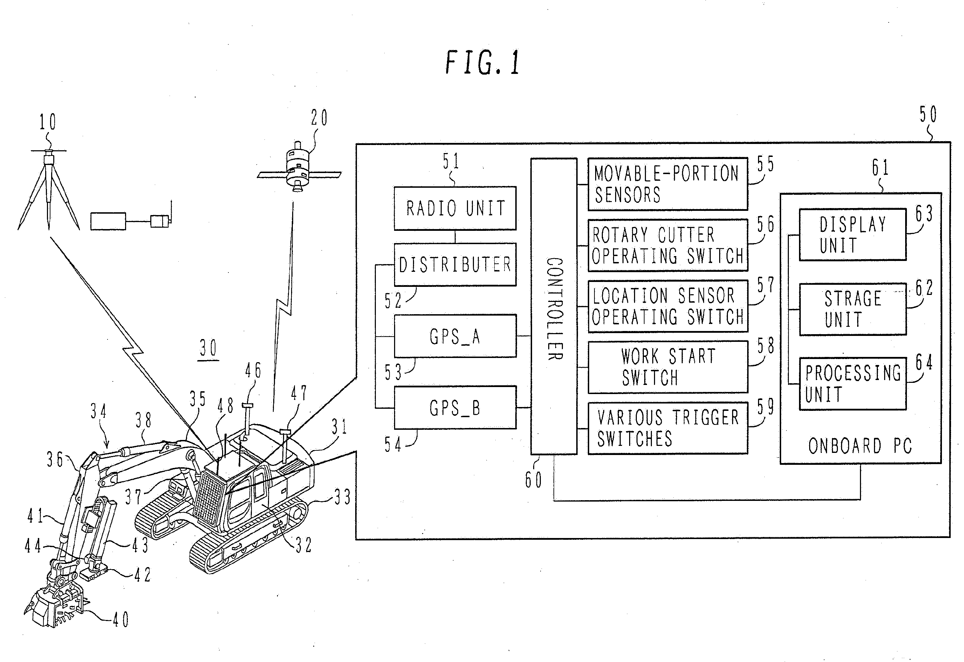

Fig. 1 shows, along with a system block diagram of a work management system according to one embodiment of the present invention, an external appearance of a working machine which is equipped with the work management system.

In Fig. 1, a working machine 30 is a mine removing machine designed by using, as a base machine, a hydraulic excavator which is well-known one of hydraulic construction machines. The working machine 30 comprises a swing body 31, a cab 32, a travel body 33, and a front operating mechanism 34. The swing body 31 is rotatably mounted on the travel body 33. In the illustrated example, the cab 32 is positioned in a left front portion of the swing body 31. While the travel body 33 is shown as being of the crawler type, it may be of the wheel type having wheels.

The front operating mechanism 34 includes a boom 35 and an arm 36. The boom 35 is mounted to a front central portion of the swing body 31 in a vertically rotatable manner, and the arm 36 is mounted to a fore end of the boom 35 in a longitudinally rotatable manner. The boom 35 and the arm 36 are driven and rotated by a boom cylinder 37 and an arm cylinder 38, respectively. A shown rotary cutter unit 40 or a skeleton bucket (not shown) is selectively mounted to a fore end of the arm 36. The rotary cutter unit 40 or the skeleton bucket is longitudinally rotatable with respect to the arm 36 and is driven and rotated by an attachment cylinder 41. A radar-type explosive probing sensor 42 is mounted to a side of the arm 36. The sensor 18 is movable by an extendable arm 43 in the lengthwise direction of the arm 36 and is also rotatable by a probing sensor cylinder 44 with respect to the extendable arm 43.

The rotary cutter unit 40 is used, for example, to remove plants such as bushes, ditch reeds, and grasses by a cutter, to spray paint over the ground for marking, and to destroy a detected explosive by the cutter after bringing the explosive into an exposed condition by a rake. Also, the skeleton bucket is used to remove earth and sand crumbled from earth walls, earthworks, banks, etc., and to bring the detected explosive into an exposed condition. The rotary cutter unit and the skeleton bucket are selectively mounted depending on the state of the work target area.

The construction and operation of such a mine removing machine are described in detail in Japanese Patent No. 3016018. A base machine for the working machine 30 is not limited to the crawler-type hydraulic excavator and can be optionally selected from among, for example, a wheel-type hydraulic excavator, a wheel loader, a bulldozer, and a caterpillar tractor such as disclosed in JP,A 7-71898.

The working machine 30 includes various movable-portion sensors 55 (see the block diagram) for detecting work data of the working machine 30. Though not individually shown, the movable-portion sensors 55 used in this embodiment includes, for example, an angle sensor for detecting the rotational angle of the boom 35 with respect to the swing body 31, an angle sensor for detecting the rotational angle of the arm 36 with respect to the boom 35, an angle sensor for detecting the rotational angle of the rotary cutter unit 40 with respect to the arm 36, a stroke sensor for detecting the stroke of the extendable arm 43, an angle sensor for detecting the rotational angle of the explosive probing sensor 42 with respect to the extendable arm 43, and an inclination sensor for detecting an inclination angle (pitch angle) of the swing body 31 in the longitudinal direction.

Further, the working machine 30 includes a plurality (two) of GPS antennas 46, 47 for receiving signals from a GPS satellite 20, and a radio antenna 48 for receiving correction data from a base station 10. The GPS antennas 46, 47 are installed respectively in the left and right sides of the swing body 31 in its rear portion.

In this embodiment, the working machine 30 includes a work management system 50 for managing the work state of the working machine 30. The work management system 50 comprises a radio unit 51, a distributor 52, GPS receivers 53, 54, the above-mentioned movable-portion sensors 55, a rotary cutter operating switch 56, a probing sensor operating switch 57, a work start switch 58, various trigger input switches 59, a controller 60, and an onboard computer (e.g., a tablet computer) 61. Though not specifically shown, the working machine 30 may further comprise a radio unit for transmitting, via an antenna, measured data obtained from the onboard computer 61 to, e.g., an office (not shown) which is engaged in supervising and managing the working machine.

The radio unit 51 receives correction data (described later) from the base station 10 via the radio antenna 48, and the distributor 52 distributes the correction data received by the radio unit 51. The GPS receivers 53, 54 measure the three-dimensional positions of the GPS antennas 46, 47 in real time based on the correction data distributed from the distributor 52 and the signals from the GPS satellite 20 which are received by the GPS antennas 46, 47.

The probing sensor operating switch 57 turns on/off the operation of the explosive probing sensor 42, and the rotary cutter operating switch 56 turns on/off the operation of the rotary cutter unit 40. The various trigger input switches 59 include, for example, trigger switches for receiving input signals from the movable-portion sensors 55 and the switches 56-58, a trigger switch for receiving a signal indicating that an antipersonnel mine has been detected as a result of the probing, a trigger switch for receiving a signal indicating that an antitank mine has been detected as a result of the probing, a trigger switch for receiving a signal indicating that an unexploded shell has been detected as a result of the probing, and a trigger switch for receiving a signal indicating that an antitank mine or an unexploded shell has been removed.

The controller 60 collects the position data from the GPS receivers 53, 54, the data regarding work situations from the various movable-portion sensors 55, and the data from the various switches 56-58 and the various trigger input switches 59.

The onboard computer 61 is constituted by a tablet computer, for example, and it includes a storage unit 62 for storing at least the work data and a display unit 63 for displaying the calculation result. The storage unit 62 also stores map data representing the topography in a surrounding region, data representing the progress of work, and so on. The display unit 63 is installed within the cab 32 at a position to face an operator sitting on a cab seat. Further, the onboard computer 61 includes a processing unit 64 for calculating the position and attitude of the working machine 30, the progress of work in the work target area, the position of the explosive probing sensor 42, the position of the rotary cutter unit 42, etc. based on the data collected by the controller 60, and for producing a display signal outputted to the display unit 63 based on the calculation result. The onboard computer 61 may be, e.g., a notebook PC, a box computer, or a panel computer other than a tablet computer.

### <Work Monitoring Screen>

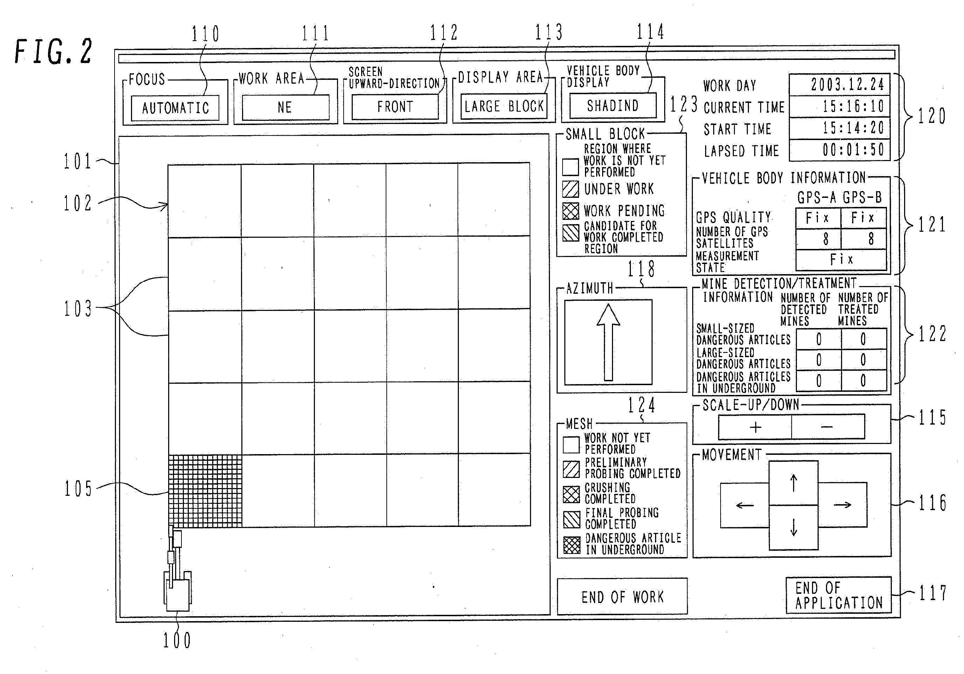

Fig. 2 shows one example of a work monitoring screen of the work management system according to the one embodiment of the present invention.

In the work monitoring screen shown in Fig. 2, when the display signal from the processing unit 64 is inputted after system startup, a working machine symbol 100 is displayed on a display screen (display region) 101 corresponding to the current position and attitude of the working machine in superimposed relation to the topography in the surrounding region. When the operator decides the work target area in the processing procedure described later, a large block 102 serving as a work target area model is displayed on the display screen 101. The work monitoring screen is of the touch panel type that displayed matters are variously changed when the operator touches objects indicated in the form of various buttons described later.

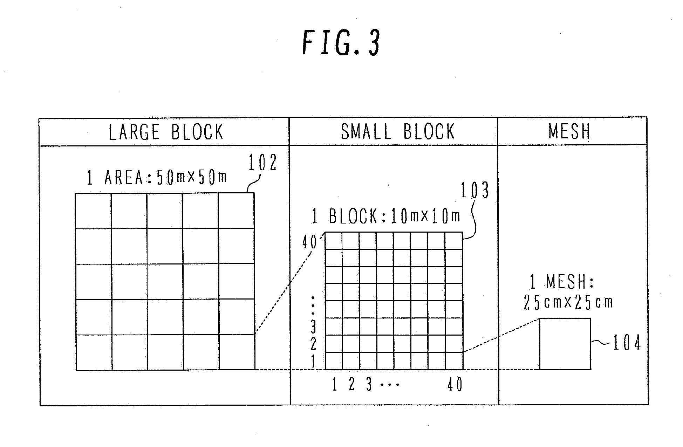

As shown in Fig. 3, the large block 102 contains, as a minimum component unit, a mesh representing a plane with a minute area, and the large block 102 is expressed by an assembly of other component units, i.e., small blocks 103, each containing meshes 104 as the component units. In this embodiment, one mesh represents a square plane with one side of 25 cm, for example. Data per mesh is stored and managed, as the work data, in the storage unit 62 and is updated with the progress of work. One block represents a square plane with one side of 10 m, which contains an assembly of 40 x 40 (= 1600) meshes, and one area represents a square plane with one side of 50 m, which contains an assembly of 5 x 5 (= 25) blocks. Data regarding the whole of the large block 102 is stored in the storage unit 62 of the onboard computer 61. Also, when the area is displayed as shown in Fig. 2, a mesh block 105 representing the progress of work per mesh within the block can be selected only one (described later in detail).

Various display changeover buttons are arranged at a top of the work monitoring screen. In this embodiment, a focus selection button 110, a work area selection button 111, a screen upward-direction selection button 112, a display area selection button 113, and a vehicle body display selection button 114 are arranged successively in that order from the left side.

The focus selection button 110 functions as display subject changeover means for selectively changing over a working machine subject-display mode in which the working machine symbol 100 is displayed as a subject on the display screen 101 and the large block 102 is moved corresponding to movement of the working machine, and a topography subject-display mode in which an optionally selected position of the topography is fixedly displayed at the center of the screen and the working machine symbol 100 is moved with respect to the fixedly displayed large block 102.

The working machine subject-display mode is selected by touching the focus selection button 110 and changing over the object content displayed therein to "AUTOMATIC". In response to such selection, the focus of a virtual display camera (not shown) is adjusted on software to the working machine symbol 100 and the display camera is moved following the working machine symbol 100, whereby the large block 102 is moved on the display screen 101 relative to the working machine symbol 100. This display mode is performed through the steps of executing calculation by the processing unit 64 in accordance with a previously stored program based on an operating signal from the display unit 63 and data from the controller 60, and inputting a display signal produced based on the calculation result to the display unit 63.

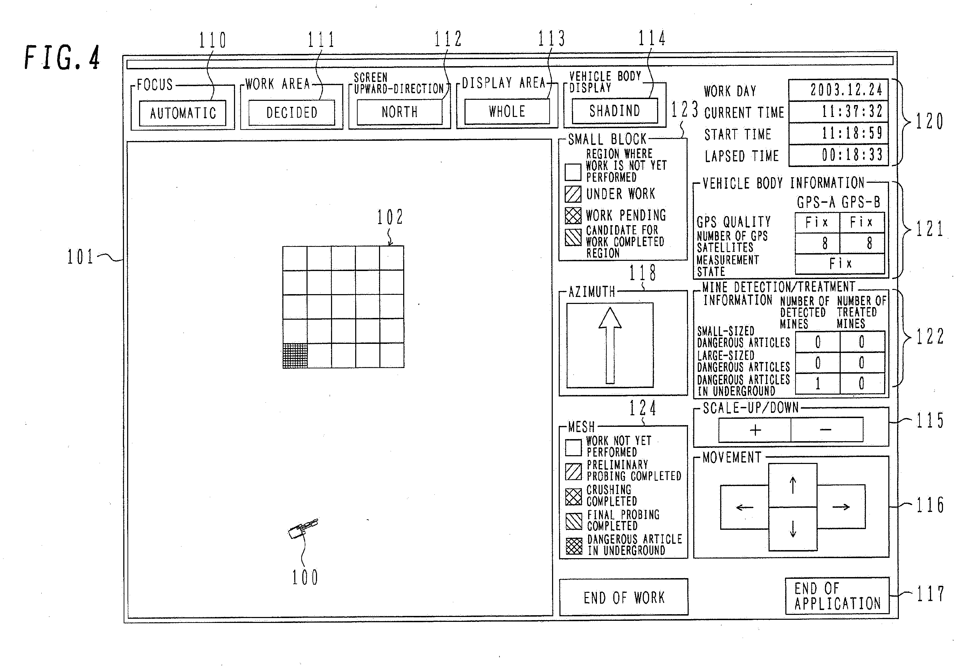

If the working machine symbol 100 is moved away from the large block 102, it becomes hard to confirm the current position and the positional relationship of the working machine symbol 100 with respect to the large block 102 on the display screen 101. Therefore, when such a state occurs in the working machine subject-display mode, the processing unit 64 moves the focus of the display camera to a position between the working machine symbol 100 and the large block 102 and also automatically changes the scaling factor of a screen display image depending on the distance between the working machine symbol 100 and the large block 102 in accordance with the program so that both the large block 102 and the working machine symbol 100 fall in the display screen 101 at the same time. Fig. 4 shows one example of the work monitoring screen in the working machine subject-display mode when the working machine symbol 100 and the large block 102 are away from each other.

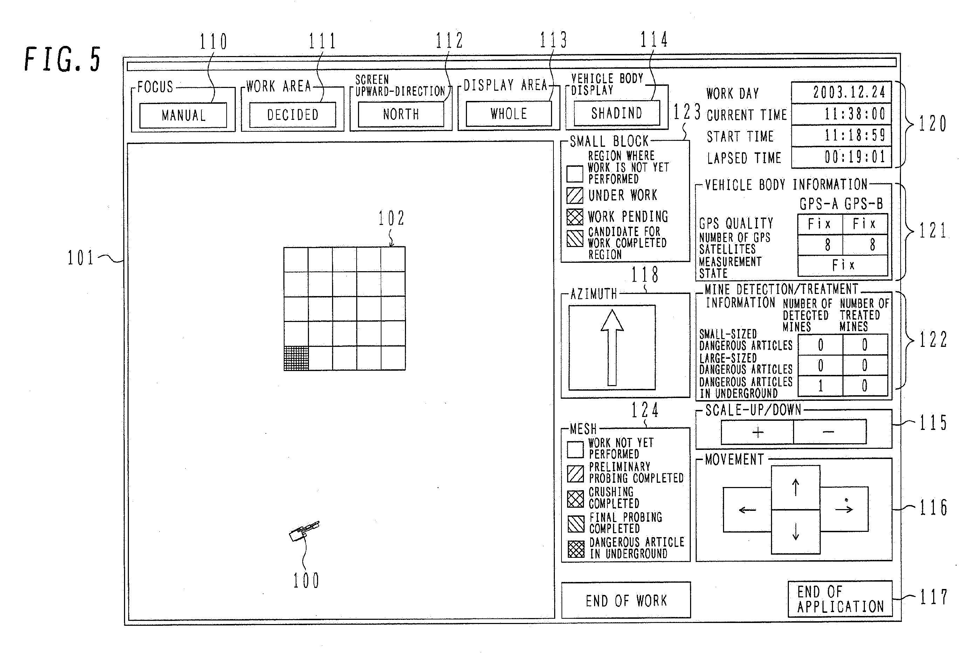

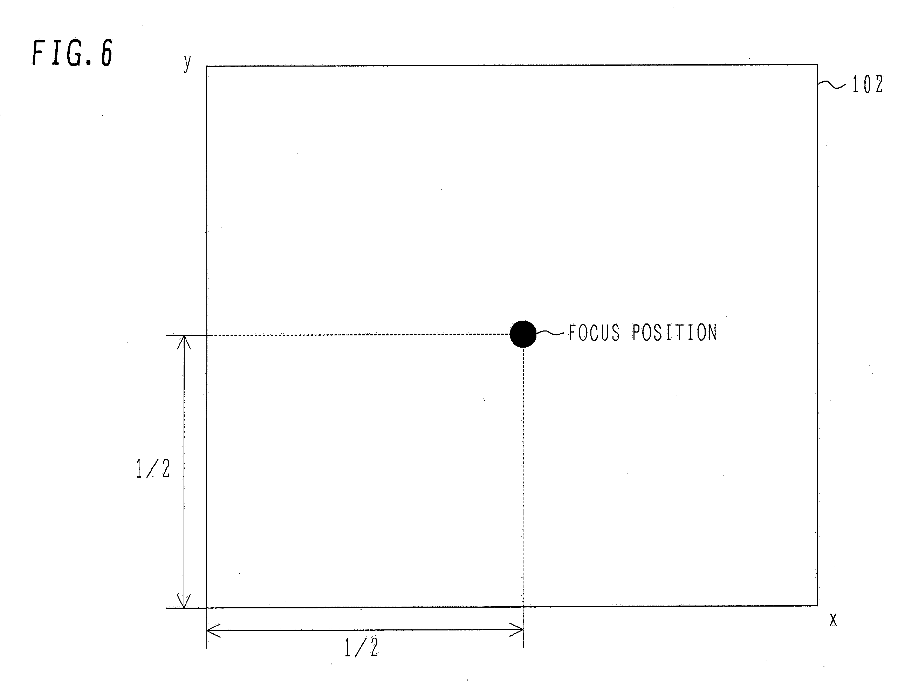

The topography subject-display mode is selected by touching the focus selection button 110 and changing over the object content displayed therein to "MANUAL" as shown in Fig. 5. In response to such selection, when the whole of the large block 102, for example, is displayed as a subject, the focus of the virtual display camera (not shown) is fixed on software to the center of the large block 102 as schematically shown in Fig. 6. As a result, the working machine symbol 100 is displayed on the display screen 101 in such a manner that the working machine symbol 100 is moved relative to the large block 102.

On the work monitoring screen of the display unit 63, a scale-up/down button 115 is arranged on the right side of the work monitoring screen to serve as scaling-factor change means for manually changing the scaling factor of the screen display image in the topography subject-display mode. Whenever a "SCALE-UP" button in the scale-up/down button 115 is touched, the scaling factor of the image displayed the display screen 101 is increased in units of, e.g., 10%, and whenever a "SCALE-DOWN" button is touched, the scaling factor of the displayed image is decreased in units of, e.g., 10%.

Below the scale-up/down button 115, a movement button 116 is arranged to serve as display position moving means for manually moving the optionally selected position which is fixed to the center of the screen (i.e., the focus position of the display camera) in the topography subject-display mode. The movement button 116 is made up of a "↑" "↓" button, a "←" button and a "→" button for moving the focus position upward, downward, leftward and rightward, respectively. When any of those four buttons is touched, the focus position is moved in a direction corresponding to the direction indicated by the displayed button object and the screen is scrolled. This display mode is also performed through the steps of executing calculation by the processing unit 64 in accordance with a previously stored program based on an operating signal from the display unit 63 and data from the controller 60, and inputting a display signal produced based on the calculation result to the display unit 63.

The function of the scale-up/down button 115 is made effective only when "MANUAL" is selected in the focus selection button 110 (i.e., only in the topography subject-display mode). Stated another way, in the working machine subject-display mode, the focus position of the display camera and the scaling factor of the displayed image are automatically changed depending on the movement of the working machine symbol 100 and the positional relationship between the working machine symbol 100 and the large block 102. In the topography subject-display mode, however, the focus position of the display camera and the scaling factor of the displayed image can be manually changed by using the scale-up/down button 115 and the movement button 116.

The work area selection button 111 is operated when the position of the large block 102 is decided. Assuming, for example, the case of deciding the position of the large block 102 on the day of work, when the working machine 30 is run to an object site and the work area selection button 111 is touched after confirming the current position based on GPS on the screen of the display unit 63, the large block 102 is displayed on the display screen 101 in any of north-east (NE), north-west (NW), south-east (SE), and south-west (SW) directions relative to the origin, which is defined by the setting point of the explosive probing sensor 42 in the working machine symbol 100, by the display signal outputted from the processing unit 64 in response to a button operating signal in accordance with the program. Fig. 2 represents an example in which the large block 102 is displayed in the north-east (NE) direction of the origin. When the work area selection button 111 is repeatedly touched from the state of Fig. 2, the object content displayed in the work area selection button 111 is changed over from NE successively and the display position of the large block 102 on the display screen 101 relative to the working machine symbol 100 is also changed correspondingly. After deciding the position of the large block 102 in such a way, the work start switch 58 is operated to finally decide (register) the position of the large block 102.

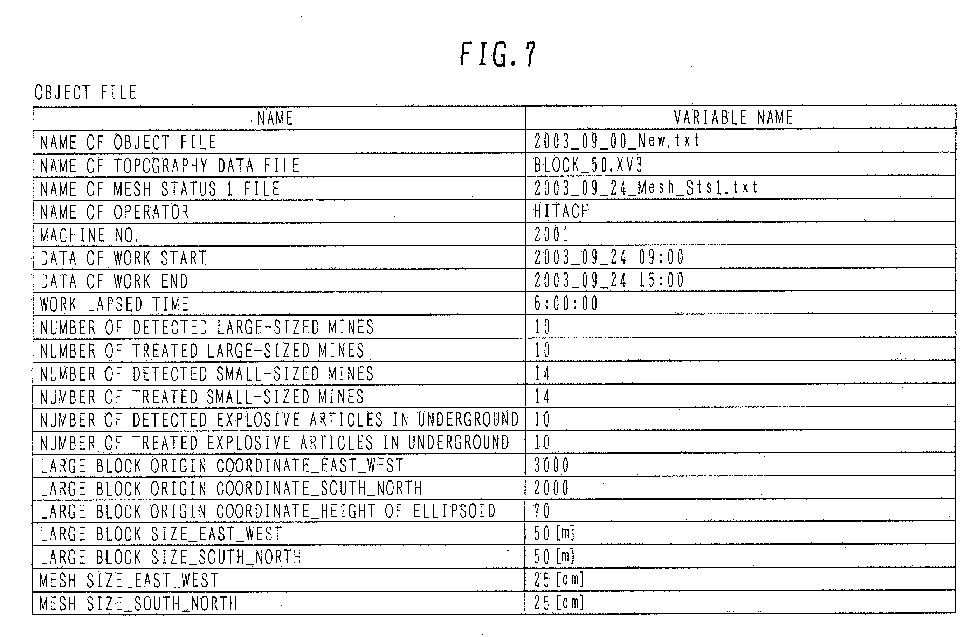

Data of the thus-decided position of the large block 102 is stored, as an object file shown in Fig. 7, in the storage unit 62 of the onboard computer 61 along with data regarding the time and the progress of work, setting of the block and the mesh, etc. Therefore, even when the working machine 100 is returned to the office after touching an application end button 117 at the end of work on that day, the working machine symbol 100 at the current position and the large block 102 are displayed on the display screen 101 at the same time, as shown in Fig. 4, when the work management system is started, for example, on condition that "AUTOMATIC" is selected in the focus selection button 110. By running the working machine 30 while looking at the display screen 101, the operator can go to the position of the large block 102 without being lost.

The screen upward-direction selection button 112 serves as display direction changeover means for selectively changing over an absolute azimuth display mode in which the large block 102 is displayed while the orientation thereof is fixed with the upper side of the screen of the display unit 63 being set correspondent to north, and a relative azimuth display mode in which the working machine symbol 100 is displayed while the orientation thereof is fixed with the upper side of the screen of the display unit 63 being set correspondent to the front direction of the working machine symbol 100.

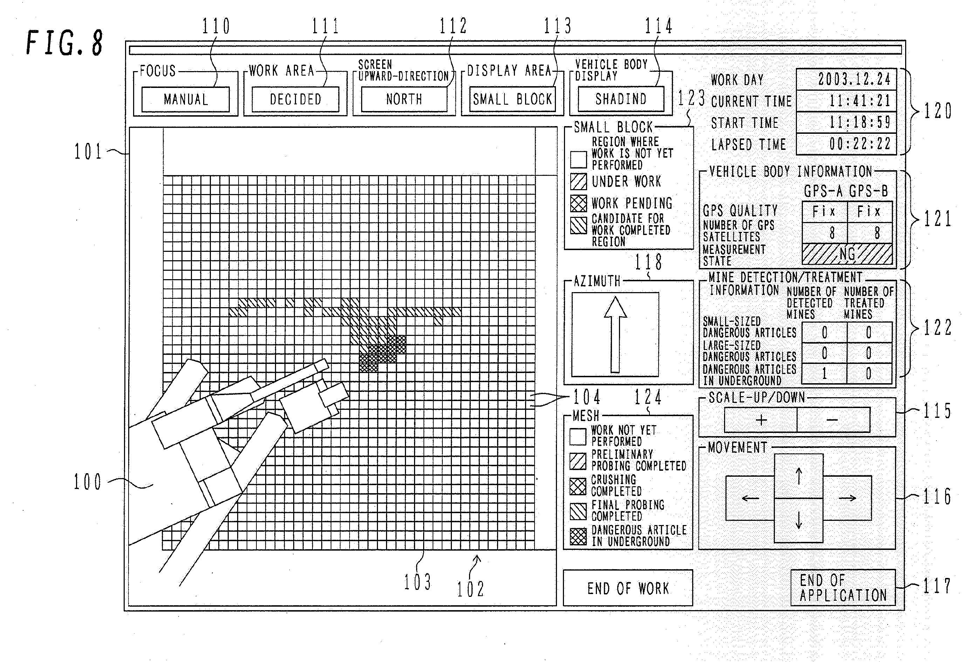

In the absolute azimuth display mode, as shown in Fig. 8, an image is always displayed while the upper side in the display screen 101 is set correspondent to north. When the actual direction of the working machine 30 is changed, the direction of the working machine symbol 100 is also changed. Fig. 8 represents the work monitoring screen in the absolute azimuth display mode when the topography subject-display mode is selected by the focus selection button 110. As seen from Fig. 8, since the upper side of the screen is set correspondent to north, an arrow indicating north is always displayed in an azimuth display region 118 positioned in the right side of the display screen 101 such that the arrow is always directed upward in the screen.

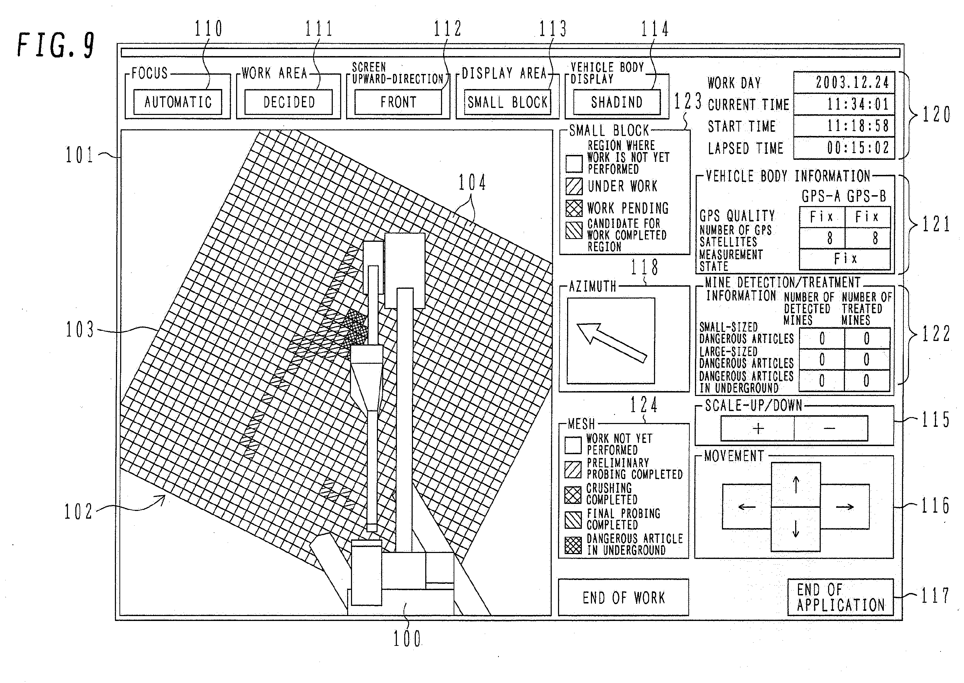

In the relative azimuth display mode, as shown in Fig. 9, an image is always displayed while the front direction of the working machine symbol 100 (i.e., the front side of the cab 32 which is located on the same side as the front operating mechanism 34) is set correspondent to the upper side in the display screen 101. Even when the actual direction of the working machine 30 is changed, the direction of the working machine symbol 100 on the display screen 101 is not changed and the topography in the surrounding region (e.g., the large block 102) is moved. Fig. 9 represents the work monitoring screen in the relative azimuth display mode when the working machine subject-display mode is selected by the focus selection button 110. As seen from Fig. 9, since the upper side of the screen is set correspondent to the front direction of the working machine, the arrow indicating north in the azimuth display region 118 is not always oriented upward in the screen. In Fig. 9, because the working machine 30 is actually oriented in the direction of north-east, the arrow indicating north in the azimuth display region 118 is oriented in the left-upward direction on the screen.

The vehicle body display selection button 114 is a button for selectively displaying the working machine symbol 100 in any of a shading model and a wire frame model. While in each of the drawings this embodiment shows, by way of example, the working machine symbol 100 in the shading model, the displayed image of the working machine symbol 100 is changed over to the wire frame model, i.e., a seeing-through model drawn by only contour lines, by touching the vehicle body display selection button 114.

The display area selection button 113 serves as display area changeover means for selectively changing over a large block display mode in which the work target area, i.e., an assembly of the small blocks 103 each made up of the meshes 104 as component units, is expressed by the large block 102 and the whole of the large block 102 is displayed on the screen of the display unit 63 with the small block 103 being a unit for display, and a small block display mode in which one desired small block 103 is displayed with the mesh 104 being a unit for display. When the display area selection button 113 is touched to change over the object content displayed therein to either "SMALL BLOCK" or "LARGE BLOCK", the display mode is changed over to the small block display mode or the large block display mode, respectively. Any display mode, i.e., each of the small block display mode and the large block display mode, is also performed through the steps of executing calculation by the processing unit 64 in accordance with a previously stored program based on an operating signal from the display unit 63 and data from the controller 60, and inputting a display signal produced based on the calculation result to the display unit 63.

Further, by repeatedly touching the display area selection button 113, a string of characters "WHOLE" is also displayed in the object of the button 113 in addition to "SMALL BLOCK" and "LARGE BLOCK". When the object content displayed in the display area selection button 113 is changed over to "WHOLE" by touching the button 113, the display mode is changed over to a whole display mode. Correspondingly, when the working machine symbol 100 is in a position away from the large block 102, the whole of the large block 102 and the working machine symbol 100 are both displayed on the display screen 101 at the same time as shown in Figs. 4 and 5.

In the right-side area of the work monitoring screen of the display unit 63, a work information display region 120, a vehicle body information display region 121, and a mine detection/treatment information display region 122 are arranged successively in that order from above. Below those regions, the scale-up/down button 115, the movement button 116, and the application end button 117 are further arranged successively in that order.

The work information display region 120 contains various regions indicating the work day, the current time, the work start time, and the lapsed time after the work start, thereby presenting work information regarding the work date to the operator.

The vehicle body information display region 121 presents the reception state of a signal transmitted from the GPS satellite 20 and received by the GPS receivers 53, 54, etc. to the operator.

The mine detection/treatment information display region 122 displays work situations regarding the number of detected targets and the number of treated targets, such as small-sized dangerous articles (e.g., antipersonnel mines), large-sized dangerous articles (e.g., antitank mines), and dangerous articles which are buried in the underground and cannot be treated by the front operating mechanism 34.

In this embodiment, a small-block identification display region 123 and a mesh identification display region 124 are further arranged above and below the azimuth display region 118, respectively.

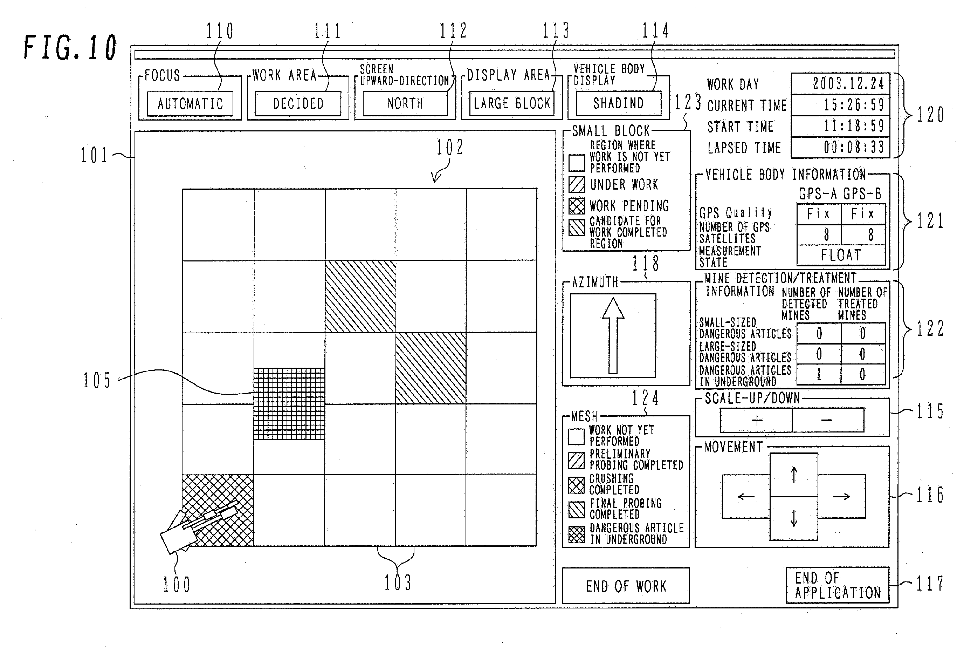

For the purpose of enabling the operator to visually confirm the progress of work with more ease, in this embodiment, when the whole of the large block 102 is displayed, the small blocks 103 constituting the large block 102 are displayed in a color-coded manner depending on the progress of work, as shown in Fig. 10, based on the work data stored in the storage unit 62. The small-block identification display region 123 represents the correspondence between each color displayed in the small block 103 and the progress of work. More specifically, in the small-block identification display region 123, different display colors are set correspondent to "WORK NOT YET PERFORMED" representing the region where work is not yet performed, "UNDER WORK" representing the region which is now under work, "WORK PENDING" representing the region where work is pending, and "CANDIDATE FOR WORK COMPLETED REGION" representing the region where work is substantially completed.

Similarly, in the small block display mode, the meshes 104 constituting the small block 102 are displayed in a color-coded manner (see Figs. 8 and 9). The mesh identification display region 124 represents the correspondence between each color displayed in the mesh 104 and the progress of work. More specifically, in the mesh identification display region 124, different display colors are set correspondent to "WORK NOT YET PERFORMED" representing the region where work is not yet performed, "PRELIMINARY PROBING COMPLETED" representing the region where preliminary probing is completed, "CRUSHING COMPLETED" representing the region where the detected dangerous article has been crushed, "FINAL PROBING COMPLETED" representing the region where preliminary probing and final probing after the crushing are both completed, and "DANGEROUS ARTICLE IN UNDERGROUND" representing the region where the dangerous article is present in the underground.

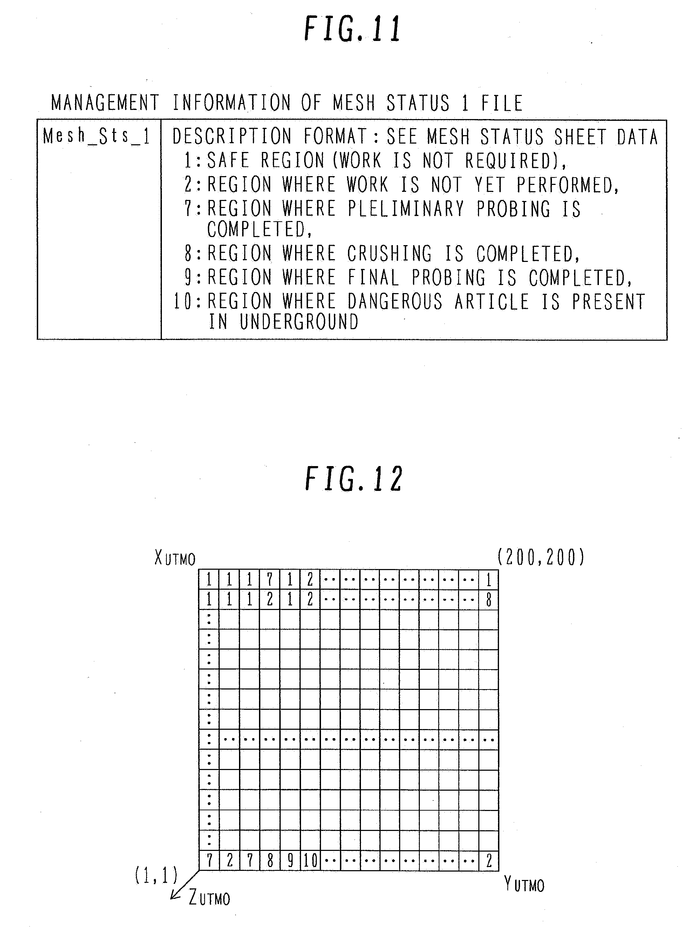

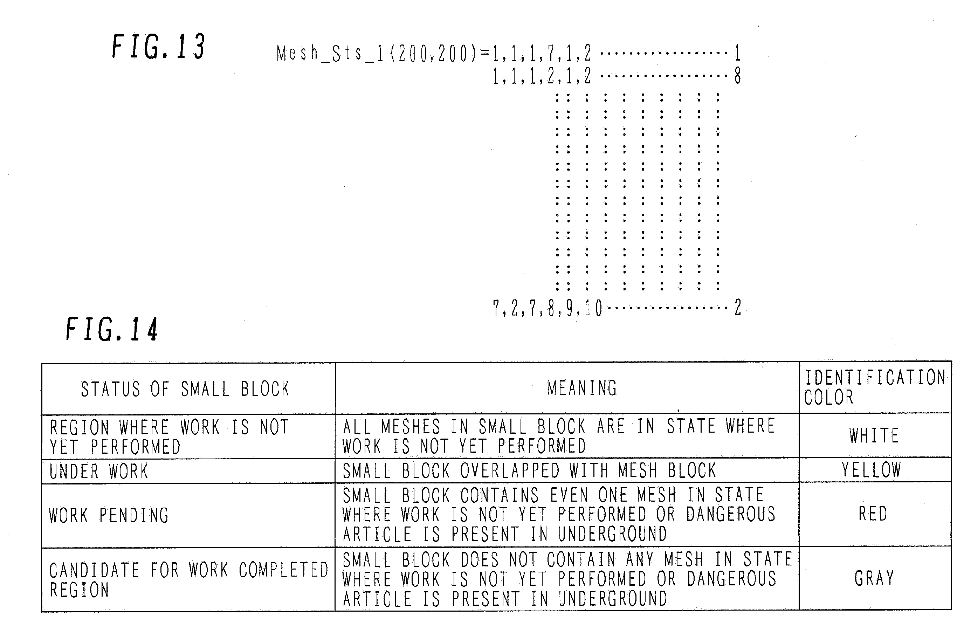

The status (progress of work) in each mesh is managed on software based on correspondence to specific numerals as shown in Fig. 11. In Fig. 11, each numeral and the status are made correspondent to each other as follows: 1: safe region (work is not required), 2: region where work is not yet performed, 7: region where preliminary probing is completed, 8: region where crushing is completed, 9: region where final probing is completed, and 10: region where the dangerous article is present in the underground. In this embodiment, the numerals 2-10 among the above combinations, i.e., 2: region where work is not yet performed, 7: region where preliminary probing is completed, 8: region where crushing is completed, 9: region where final probing is completed, and 10: region where the dangerous article is present in the underground, are contained in the mesh identification display region 124 and are displayed in different identification colors so that the actual progress of work in each mesh is reflected in the corresponding mesh displayed on the display screen 101. Of course, the combination of 1: safe region (work is not required) may be added to the mesh identification display region 124 along with a particular identification color, thus enabling that status information to be also displayed in the mesh of the display screen 101 in a color-coded manner. Fig. 12 shows the status information of individual meshes within the whole of the large block 102. The status information of individual meshes within the whole of the large block 102 is stored in the storage unit 62 in the form of data as shown in Fig. 13 and is updated with the progress of work.

Fig. 14 is a table showing the correspondence relationship between definition and an identification color per status (state) of the small block in the small-block identification display area 123.

In this embodiment, as shown in Fig. 11, a small block in which the meshes contained therein are all in the state where work is not yet performed is defined as "REGION WHERE WORK NOT YET PERFORMED" and is made correspondent to a particular identification color (white). Also, "UNDER WORK" means a small block overlapped with the mesh block 105 and is made correspondent to a particular identification color (yellow). Further, when a small block contains even one mesh in the state where work is not yet performed or the dangerous article is present in the underground, that small block is defined as "WORK PENDING" and is made correspondent to a particular identification color (red). Moreover, when a small block does not contain any mesh in the state where work is not yet performed or the dangerous article is present in the underground, that small block is defined as "CANDIDATE FOR WORK COMPLETED REGION" and is made correspondent to a particular identification color (gray). A table representing such management information is stored in the storage unit 62. The small block is displayed in a color-coded manner, as shown in Fig. 10, through the steps of executing predetermined calculation by the processing unit 64 in accordance with the table and the work information per mesh, shown in Fig. 13, and inputting a display signal produced based on the calculation result to the display unit 63.

Additionally, the display screen 101 also has the function of mesh block moving means for, in the large block display mode, optionally moving the mesh block 105 which displays the work state in an area corresponding to one small block, to thereby display the work state in a desired position without changing over the display mode to the small block display mode. In this embodiment, a minimum movement unit of the mesh block 105 is half the small block, and the mesh block 105 can be moved in any of eight directions (i.e., north, south, west, east, north-east, north-west, south-east, and south-west) when it is moved in units of half the small block. The mesh block 105 can also be directly moved to an optionally selected small block.

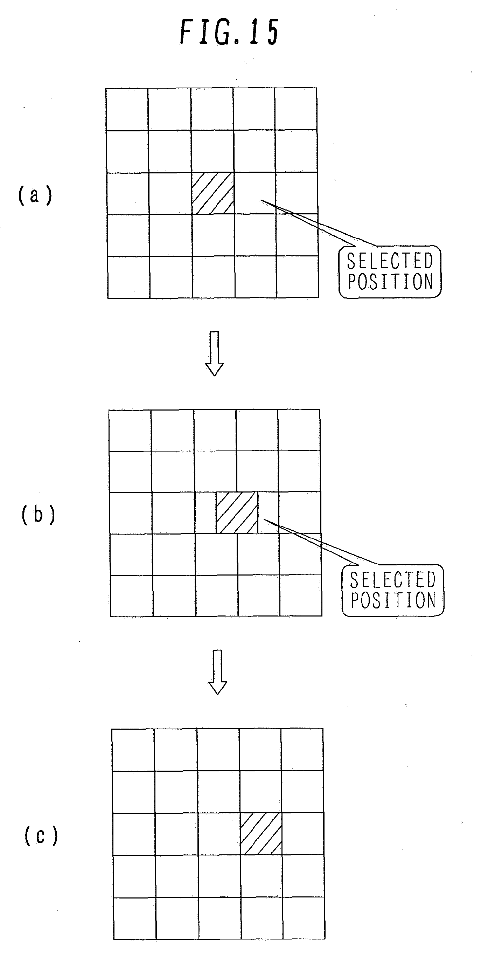

Figs. 15-18 are each an explanatory view for explaining an example of the operation when the mesh block 105 is moved in units of half the small block.

In this embodiment, as shown in Figs. 15-18, by touching a small block adjacent to the mesh block 105, or another small block partly overlapped with the mesh block 105 while straddling the boundary between the adjacent small blocks, or still another small block adjacent to the partly overlapped small block, the mesh block 105 is moved in units of half the small block in a direction depending on the positional relationship between the touched small block and the mesh block 105.

For example, in Fig. 15(a), the mesh block 105 is positioned to lie on one small block in complete matching. When the operator selects and touches one of small blocks adjacent to the mesh block 105 in the east, west, south and north directions in that state, the mesh block 105 is moved by a distance of half the small block in the direction toward the selected small block. For example, when the operator selects and touches the small block adjacent on the east (right) side, the mesh block 105 is moved by a distance of half the small block in the direction toward the selected small block (i.e., to the east) as shown in Fig. 15(b). In the state of Fig. 15(b), the mesh block 105 is overlapped with two small blocks adjacent to each other in the east-and-west direction while straddling the boundary between those two small blocks. Even in such a state, when the operator touches the small block adjacent on the east side (in the partly overlapped state), the mesh block 105 is further moved to the east by a distance of half the small block and is positioned to lie on the adjacent small block, to which it has moved, in complete matching as shown in Fig. 15(c).

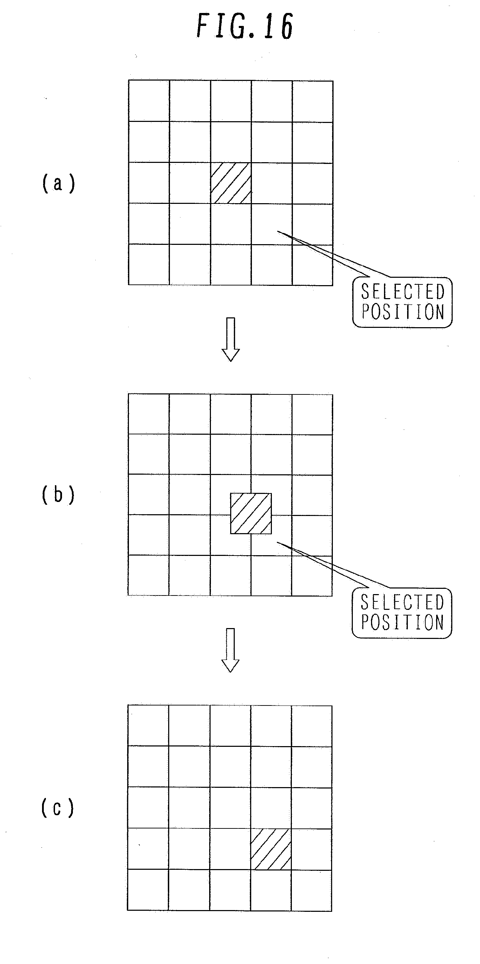

Also, in the state where the mesh block 105 is positioned in match with one small block as shown in Fig. 16(a), when the operator selects and touches one of small blocks adjacent to the mesh block 105 in the north-east, north-west, south-east and south-west directions other than the east, west, south and north directions, the mesh block 105 is obliquely moved by a distance of half the small block in the direction toward the selected small block. For example, when the operator selects and touches the small block adjacent on the south east (lower right) side, the mesh block 105 is moved by a distance of half the small block in the direction toward the selected small block (i.e., to the south east) as shown in Fig. 16(b). In the state of Fig. 16(b), the mesh block 105 is overlapped with four small blocks adjacent to each other while straddling the boundaries between those four small blocks. Even in such a state, when the operator touches the small block adjacent on the south east side (in the partly overlapped state), the mesh block 105 is further moved to the south east by a distance of half the small block and is positioned to lie on the adjacent small block, to which it has moved, in complete matching as shown in Fig. 16(c).

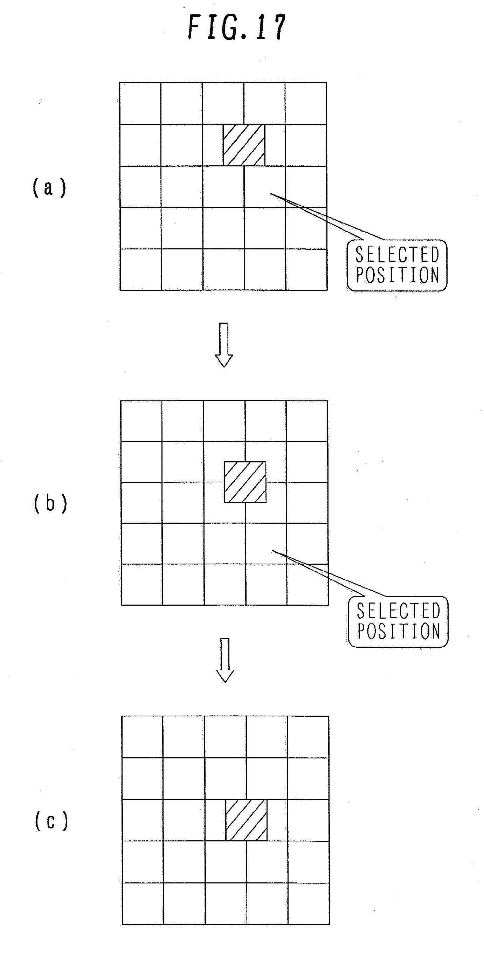

Further, in Fig. 17(a), the mesh block 105 is overlapped with two small blocks adjacent to each other in the east-and-west direction while straddling the boundary between those two small blocks. The mesh block 105 can be moved by a distance of half the small block in the north-and-south direction from that state by touching the small block adjacent to the mesh block 105 in the north-and-south direction. For example, when the operator selects and touches any of two small blocks adjacent to the mesh block 105 on the south (lower) side, the mesh block 105 is moved by a distance of half the small block in the direction toward the selected small block (i.e., to the south) as shown in Fig. 17(b). In the state of Fig. 17(b), the mesh block 105 is overlapped with four small blocks adjacent to each other while straddling the boundaries between those four small blocks. The mesh block 105 can be further moved by a distance of half the small block in the north-and-south direction from that state by touching still another small block adjacent to the small block in the moving direction, which is adjacent to (partly overlapped with) the mesh block 105 in the direction in which the mesh block 105 is to be moved. For example, when the operator touches still another small block adjacent to any of the two small blocks on the south side, which is adjacent to (partly overlapped with) the mesh block 105 on the south side in Fig. 17(b), the mesh block 105 is further moved by a distance of half the small block to the south as shown in Fig. 17(c).

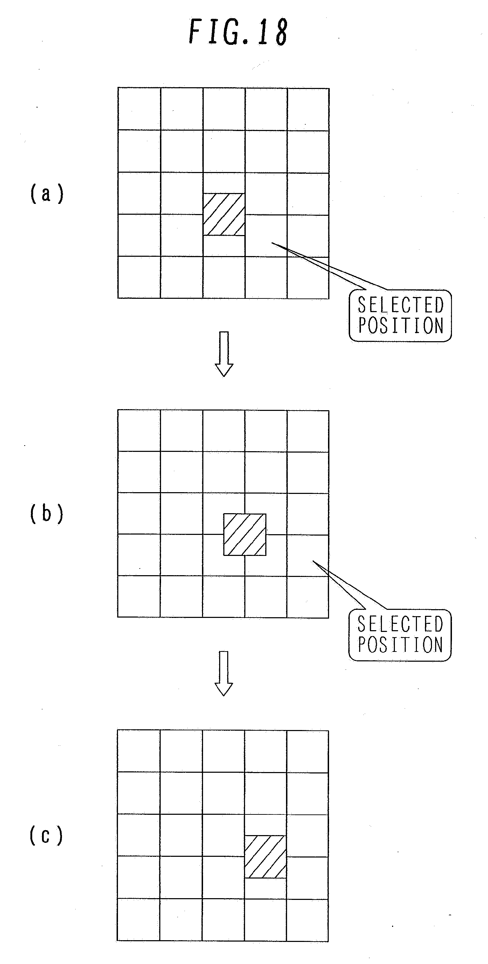

In Fig. 18(a), the mesh block 105 is overlapped with two small blocks adjacent to each other in the north-and-south direction while straddling the boundary between those two small blocks. The mesh block 105 can be moved by a distance of half the small block in the east-and-west direction from that state by touching the small block adjacent to the mesh block 105 in the east-and-west direction. For example, when the operator selects and touches any of two small blocks adjacent to the mesh block 105 on the east (right) side, the mesh block 105 is moved by a distance of half the small block in the direction toward the selected small block (i.e., to the east) as shown in Fig. 18(b). In the state of Fig. 18(b), the mesh block 105 is overlapped with four small blocks adjacent to each other while straddling the boundaries between those four small blocks. The mesh block 105 can be further moved by a distance of half the small block in the east-and-west direction from that state by touching still another small block adjacent to the small block in the moving direction, which is adjacent to (partly overlapped with) the mesh block 105 in the direction in which the mesh block 105 is to be moved. For example, when the operator touches still another small block adjacent to any of the two small blocks on the east side, which is adjacent to (partly overlapped with) the mesh block 105 on the east side in Fig. 18(b), the mesh block 105 is further moved by a distance of half the small block to the east as shown in Fig. 18(c).

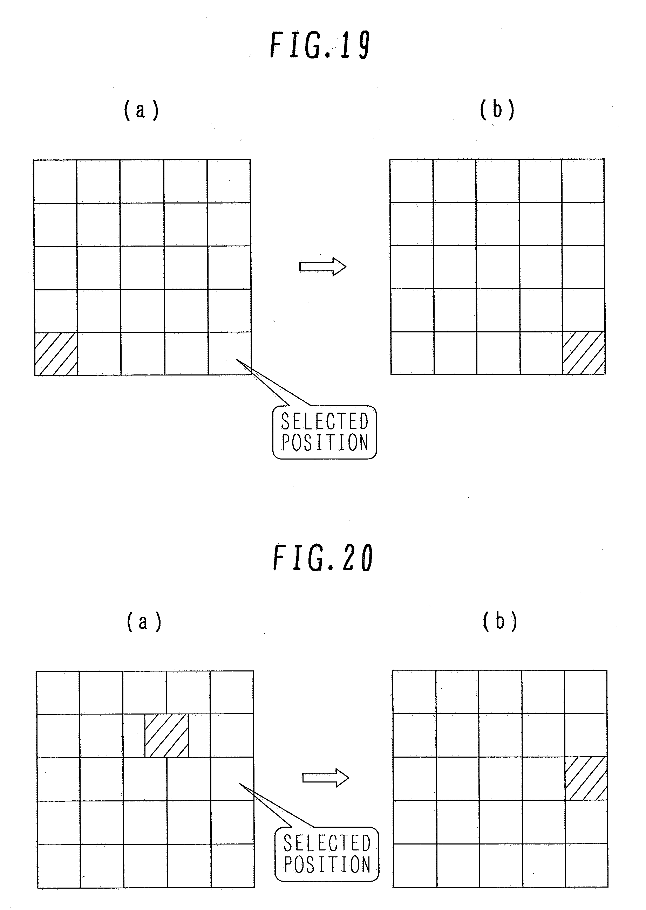

Figs. 19-22 are each an explanatory view for explaining an example of the operation when the mesh block 105 is directly moved to any desired small block.

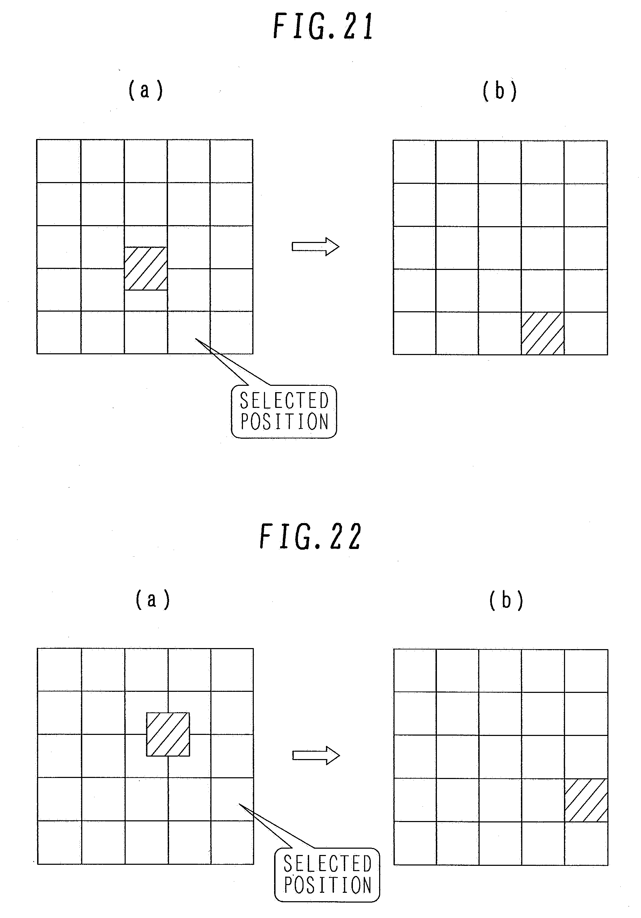

In this embodiment, as shown in Figs. 19-22, by touching a small block other than the small blocks which are to be selected to move the mesh block 105 in units of half the small block, the mesh block 105 can be directly moved to the touched small block so as to lie on it in complete matching. Stated another way, when the operator touches the small block other than the small blocks which are in the positional relationship capable of moving the mesh block by a distance of half the small block, the mesh block is moved to the touched small block and lies on it in complete matching regardless of the current overlapping relation with the small blocks, i.e., regardless of the case where the mesh block 105 is in match with one small block as shown in Fig. 19, the case where the mesh block 105 is straddled over two small blocks as shown in Figs. 20 and 21, and the case where the mesh block 105 is straddled over the four small blocks as shown in Fig. 22. After such direct movement, the mesh block 105 can be further moved by a distance of half the small block in a similar manner to that described above with reference to Figs. 15-18.

### <System Operation>

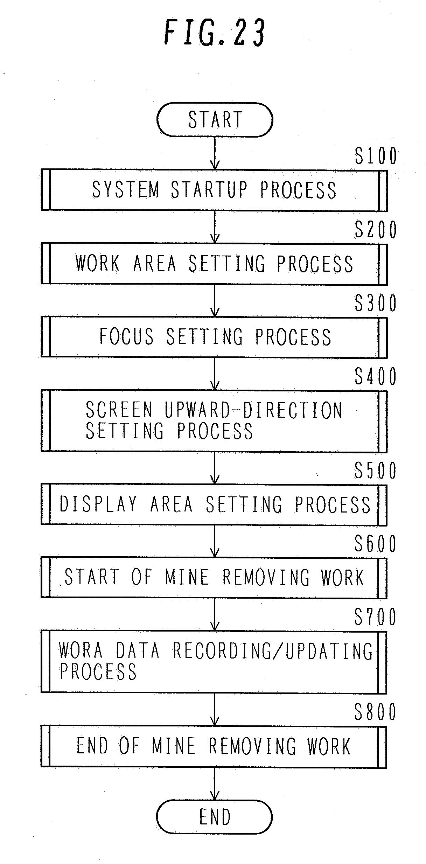

Fig. 23 is a flowchart schematically showing an overall flow of the system operation of the work management system according to the embodiment.

Fig. 23 shows, by way of example, the case where the processing procedure of the work management system is advanced as follows. The system is first started up in step 100 and the work area (large block 102) is then set in step 200. After executing a focus setting process in step 300, a screen upward-direction setting process in step 400, and a display area setting process in step 500, target work (mine removing work in this embodiment) is started in step 600. With the progress of the target work, the work management system records and updates the work data (step 700). At the end of work, a process required for the end of the target work is executed (step 800), followed by bringing the procedure to the end. During a period from the work area setting process to the end of work, the processes of steps 300-500 are executed in response to each command from the operator with the progress of work. In the process of step 700, work history stored, for example, per certain time is stored in the storage unit 62 at the end of work.

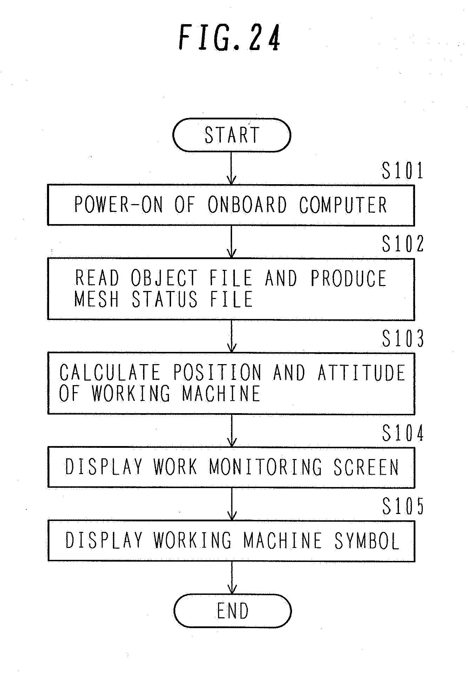

Fig. 24 is a flowchart showing the processing procedure in the system startup process (step 100).

In the system startup process, a power supply switch of the onboard computer 61 is first turned on by the operator in step 101. Then, in step 102, the processing unit 64 reads the object file, which is shown, by way of example, in Fig. 7, from the storage unit 62 and produces the mesh status file which is shown, by way of example, in Fig. 13. In subsequent step 103, the processing unit 64 calculates the position and attitude of the working machine based on the calculation results of the GPS receivers 53, 54. In step 104, it outputs a display signal to the display unit 63 based on the object file and the mesh status file, thereby displaying the work monitoring screen. Further, in step 105, it displays the working machine symbol in the calculated position and attitude on the display screen 101.

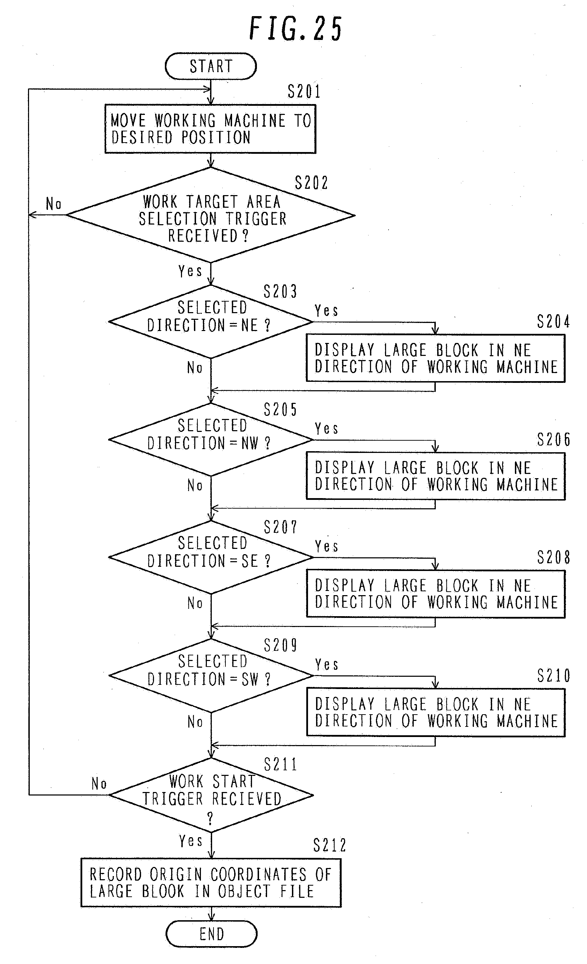

Fig. 25 is a flowchart showing the processing procedure in the work area setting process (step 200).

In the work area setting process, first in step 201, the operator moves the working machine to a desired position and makes a portion serving as the origin position of the large block to be set (e.g., the rotary cutter unit 40 or the explosive probing sensor 42 of the front operating mechanism 34) positioned in match with a desired point. In subsequent step 202, the processing unit 64 determines whether the work area selection button 111 is touched and a work target area selection trigger is received from the display unit 63 in the above state. If the work target area selection trigger is not inputted and the determination of step 202 is not satisfied, the processing unit 64 returns the procedure to step 201. If the input of the work area selection trigger is confirmed and the determination of step 202 is satisfied, the processing unit 64 shifts the procedure to step 203.

In step 203, it is determined whether the inputted work area selection trigger specifies, as a candidate for the setting area of the large block, an area in the north-east (NE) direction as viewed from the origin position. If the selected direction is NE and the determination of step 203 is satisfied, the processing unit 64 shifts to step 204 in which a display signal for displaying the large block 102 in the north-east direction as viewed from the working machine is calculated in accordance with the predetermined program and is outputted to the display unit 63. As a result, the large block 102 is displayed on the display screen 101 in an area on the north-east side of the working machine symbol 100 (see Fig. 2). After the process of step 204 has been executed, or if the determination of step 203 is not satisfied, the processing unit 64 shifts the procedure to step 205.

In step 205, it is determined whether the inputted work area selection trigger specifies, as a candidate for the setting area of the large block, an area in the north-west (NW) direction as viewed from the origin position. If the selected direction is NW and the determination of step 205 is satisfied, the processing unit 64 shifts to step 206 in which a display signal for displaying the large block 102 in the north-west direction as viewed from the working machine is calculated in accordance with the predetermined program and is outputted to the display unit 63. As a result, the large block 102 is displayed on the display screen 101 in an area on the north-west side of the working machine symbol 100. After the process of step 206 has been executed, or if the determination of step 205 is not satisfied, the processing unit 64 shifts the procedure to step 207.

In step 207, it is determined whether the inputted work area selection trigger specifies, as a candidate for the setting area of the large block, an area in the south-east (SE) direction as viewed from the origin position. If the selected direction is SE and the determination of step 207 is satisfied, the processing unit 64 shifts to step 208 in which a display signal for displaying the large block 102 in the south-east direction as viewed from the working machine is calculated in accordance with the predetermined program and is outputted to the display unit 63. As a result, the large block 102 is displayed on the display screen 101 in an area on the south-east side of the working machine symbol 100. After the process of step 208 has been executed, or if the determination of step 207 is not satisfied, the processing unit 64 shifts the procedure to step 209.

In step 209, it is determined whether the inputted work area selection trigger specifies, as a candidate for the setting area of the large block, an area in the south-west (SW) direction as viewed from the origin position. If the selected direction is SW and the determination of step 209 is satisfied, the processing unit 64 shifts to step 210 in which a display signal for displaying the large block 102 in the south-west direction as viewed from the working machine is calculated in accordance with the predetermined program and is outputted to the display unit 63. As a result, the large block 102 is displayed on the display screen 101 in an area on the south-west side of the working machine symbol 100. After the process of step 210 has been executed, or if the determination of step 209 is not satisfied, the processing unit 64 shifts the procedure to step 211.

In step 211, the processing unit 64 determines whether a work start trigger for deciding, as the work target area, the large block 103 displayed in the desired direction relative the working machine symbol 100 is inputted. If the operator depresses the work start switch 58 and the work start trigger is inputted, the processing unit 64 shifts the procedure to step 212 in which the origin coordinate data of the decided large block 103 is recorded in the object file, followed by bringing the procedure of Fig. 25 to the end. If the work start trigger is not inputted and the determination of step 211 is not satisfied, the processing unit 64 returns the procedure to step 201.

The work area setting process of Fig. 25 is a procedure required when the large block serving as the work target is not yet registered. Therefore, that procedure is not required, for example, if the work area setting process of step 200 has already been executed in the work carried out in the past.

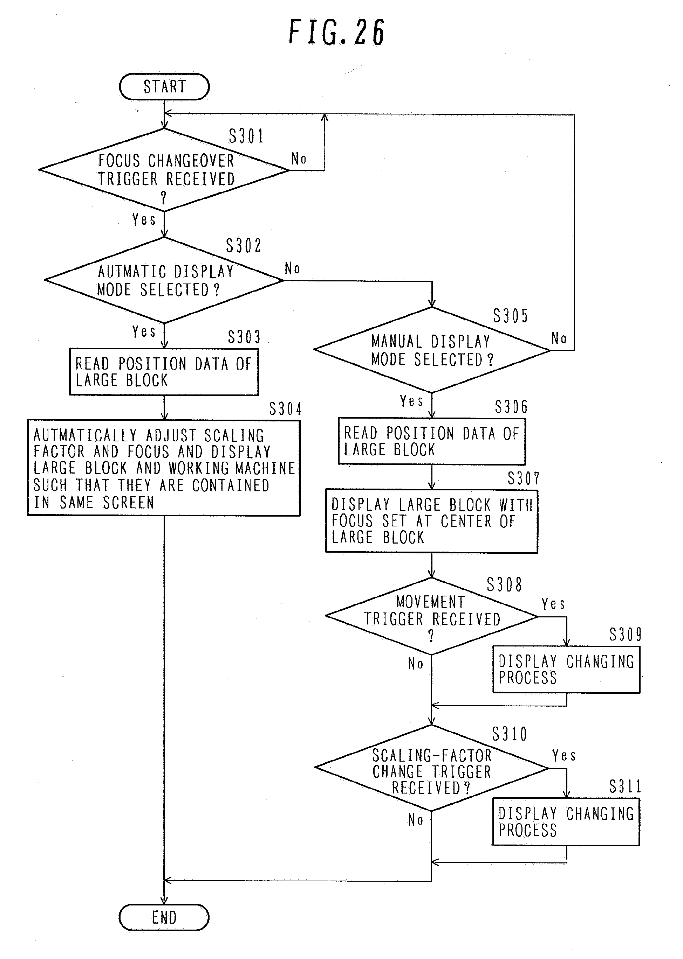

Fig. 26 is a flowchart showing the processing procedure in the focus setting process (step 300).

The operator sets the display mode of the display screen 101 to one of an automatic display mode (working machine subject-display mode) and a manual display mode (topography subject-display mode) in order that the operator can easily confirm the current positional relationship between the work target area and the working machine, etc. or that the operator can easily progress the work. In the focus setting process, the processing unit 64 first determines in step 301 whether the focus selection button 110 is touched and a focus changeover trigger is received from the display unit 63. If the focus changeover trigger is not inputted and the determination of step 301 is not satisfied, the processing unit 6-4 repeats the procedure of step 301. If the input of the focus changeover trigger is confirmed and the determination of step 301 is satisfied, the processing unit 64 shifts the procedure to step 302.

In step 302, the processing unit 64 determines whether the received focus changeover trigger indicates selection of the automatic display mode. If the automatic display mode is selected and the determination of step 302 is satisfied, the processing unit 64 reads, in step 303, the origin coordinate position of the large block and the setting of the large block from the object file which has been stored in the storage unit 62. Taking into account the current position, in step 304, the processing unit 64 automatically calculates the scaling factor of the displayed image and the focus (central point of the screen) in accordance with the previously stored program such that the working machine symbol 100 and the whole of the large block 103 fall in the entirety of the display screen 101, followed by outputting a display signal to the display unit 63 based on the calculation result. As a result, the working machine symbol 100 and the large block 103 are both contained in the display screen 101 at the scaling factor and the focus position corresponding to the distance between the working machine and the work target area. In the automatic display mode, the scaling factor and the focus position are always optimized with the movement of the working machine. Until the system operation is brought to the end, the automatic display mode is kept effective unless a changeover signal to the manual display mode is inputted.

On the other hand, if the automatic display mode is not selected in step 302, the processing unit 64 shifts the procedure to step 305. In step 302, the processing unit 64 determines whether the received focus changeover trigger indicates selection of the manual display mode. If the inputted focus changeover signal does not indicate selection of the manual display mode, the determination of step 305 is not satisfied and the processing unit 64 returns the procedure to step 301.

If the focus changeover trigger indicates selection of the manual display mode and the determination of step 305 is satisfied, the processing unit 64 reads, in step 306, the origin coordinate position of the large block and the setting of the large block from the object file which has been stored in the storage unit 62. In step 307, the whole of the large block 103 is displayed on the display screen 101 in accordance with the previously stored program while the focus is fixed to the center of the large block 103.

In subsequent step 308, the processing unit 64 determines whether the movement button 116 is touched and a movement trigger is inputted from the display unit 63. If the movement trigger is inputted and the determination of step 308 is satisfied, the processing unit 64 shifts the procedure to step 309 in which a display changing process is executed in response to the inputted movement trigger (detailed procedure of the display changing process will be described later).

After the process of step 309 has been executed, or if the determination of step 308 is not satisfied, the processing unit 64 shifts the procedure to step 310. In step 310, the processing unit 64 determines whether the scale-up/-down button 115 is touched and a scaling-factor change trigger is inputted from the display unit 63. If the scaling-factor change trigger is inputted and the determination of step 310 is satisfied, the processing unit 64 shifts the procedure to step 311 in which a display changing process is executed in response to the inputted scaling-factor change trigger (detailed procedure of the display changing process will be described later).

Until the system operation is brought to the end, the manual display mode is also kept effective unless a changeover signal to the automatic display mode is inputted. While in the above description the presence or absence of the scaling-factor change trigger is determined after determining whether the movement trigger is received, those determination steps may be reversed in order. During a period in which the manual display mode is continued, whenever the movement trigger and the scaling-factor change trigger are inputted, the display changing process is repeated correspondingly regardless of the number of times of the trigger inputs.

After the process of step 311 has been executed, or if the determination of step 310 is not satisfied, or after the process of step 304 has been executed, the processing unit 64 brings the procedure in Fig. 26 to the end.

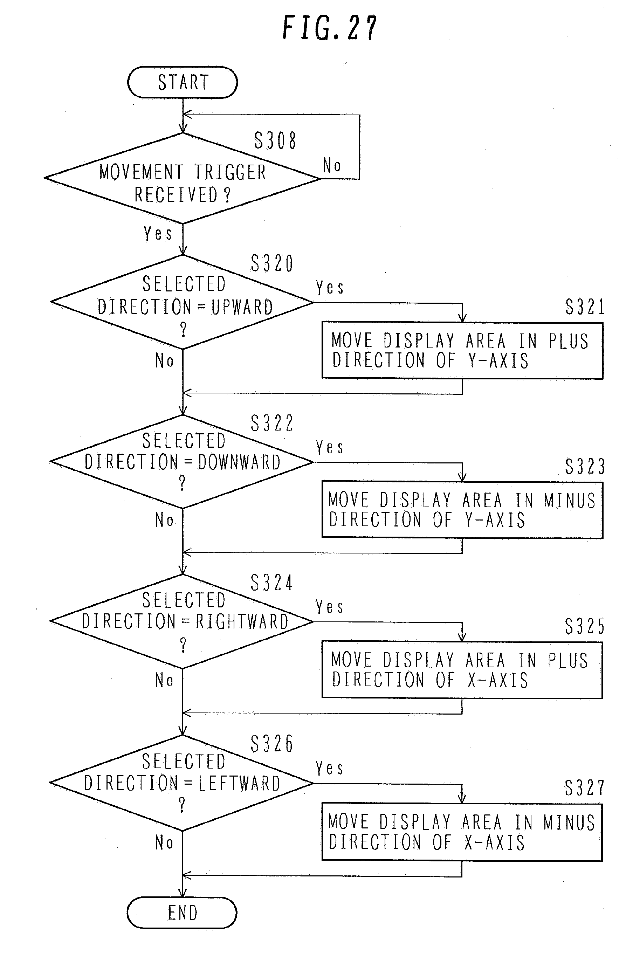

Fig. 27 is a flowchart showing details of the display changing process (step 309), which is executed after receiving the movement trigger.

If the input of the movement trigger is confirmed in step 308, the processing unit 64 shifts the procedure to step 320.

In step 320, the processing unit 64 determines whether the inputted movement trigger indicates such a selection that an image displayed on the display screen 101 is moved in the upward direction of the screen from the current state (i.e., whether the touched button is the "↑"button). If the selected direction is the upward direction and the determination of step 320 is satisfied, the processing unit 64 shifts to step 321 in which a display signal for moving the image displayed on the screen in the plus direction of the Y-axis (i.e., in the upward direction of the screen) is calculated in accordance with the predetermined program and is outputted to the display unit 63. The amount of movement performed at that time is, e.g., about 10% of the size of the display screen 101. As a result, an area shifted in the upward direction of the screen from the area having been displayed so far is now displayed on the display screen 101. After the process of step 321 has been executed, or if the determination of step 320 is not satisfied, the processing unit 64 shifts the procedure to step 322.

In step 322, the processing unit 64 determines whether the inputted movement trigger indicates such a selection that an image displayed on the display screen 101 is moved in the downward direction of the screen from the current state (i.e., whether the touched button is the "↓" button). If the selected direction is the downward direction and the determination of step 322 is satisfied, the processing unit 64 shifts to step 323 in which a display signal for moving the image displayed on the screen in the minus direction of the Y-axis (i.e., in the downward direction of the screen) is calculated in accordance with the predetermined program and is outputted to the display unit 63. The amount of movement performed at that time can be the same as that in step 321. As a result, an area shifted in the downward direction of the screen from the area having been displayed so far is now displayed on the display screen 101. After the process of step 323 has been executed, or if the determination of step 322 is not satisfied, the processing unit 64 shifts the procedure to step 324.

In step 324, the processing unit 64 determines whether the inputted movement trigger indicates such a selection that an image displayed on the display screen 101 is moved in the rightward direction of the screen from the current state (i.e., whether the touched button is the "→" button). If the selected direction is the rightward direction and the determination of step 324 is satisfied, the processing unit 64 shifts to step 325 in which a display signal for moving the image displayed on the screen in the plus direction of the X-axis (i.e., in the rightward direction of the screen) is calculated in accordance with the predetermined program and is outputted to the display unit 63. The amount of movement performed at that time can be the same as that in step 321. As a result, an area shifted in the rightward direction of the screen from the area having been displayed so far is now displayed on the display screen 101. After the process of step 325 has been executed, or if the determination of step 324 is not satisfied, the processing unit 64 shifts the procedure to step 326.

In step 326, the processing unit 64 determines whether the inputted movement trigger indicates such a selection that an image displayed on the display screen 101 is moved in the leftward direction of the screen from the current state (i.e., whether the touched button is the "←" button). If the selected direction is the leftward direction and the determination of step 326 is satisfied, the processing unit 64 shifts to step 327 in which a display signal for moving the image displayed on the screen in the minus direction of the X-axis (i.e., in the leftward direction of the screen) is calculated in accordance with the predetermined program and is outputted to the display unit 63. The amount of movement performed at that time can be the same as that in step 321. As a result, an area shifted in the leftward direction of the screen from the area having been displayed so far is now displayed on the display screen 101. After the process of step 327 has been executed, or if the determination of step 326 is not satisfied, the processing unit 64 brings the procedure of Fig. 27 to the end.

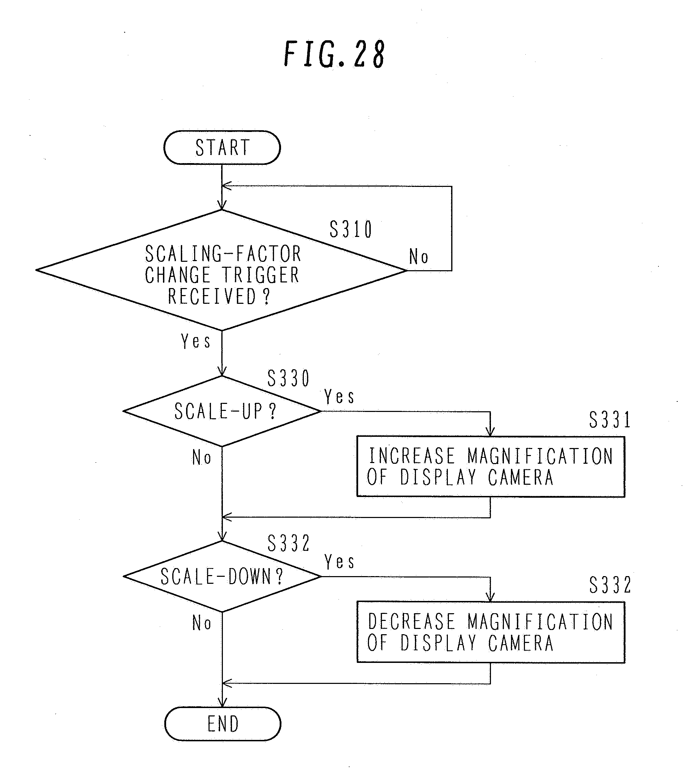

Fig. 28 is a flowchart showing details of the display changing process (step 311) after receiving the scaling-factor change trigger.

If the input of the scaling-factor change trigger is confirmed in step 310, the processing unit 64 shifts the procedure to step 330.

In step 330, the processing unit 64 determines whether the inputted scaling-factor change trigger indicates such a selection that the scaling factor of an image displayed on the display screen 101 is increased (the image is enlarged) from the current state (i.e., whether the touched button is the "+" button). If the touched button is the "+" button and the determination of step 330 is satisfied, the processing unit 64 shifts to step 331 in which the scaling-factor of the screen display image is increased to enlarge the image on the display screen 101 in accordance with the predetermined program. The amount of scale-up performed at that time is, e.g., about 5% in comparison with the current scaling factor. As a result, an area smaller than the area having been displayed so far is now displayed on the display screen 101 in enlarged scale. After the process of step 331 has been executed, or if the determination of step 330 is not satisfied, the processing unit 64 shifts the procedure to step 332.

In step 332, the processing unit 64 determines whether the inputted scaling-factor change trigger indicates such a selection that the scaling factor of an image displayed on the display screen 101 is decreased (the image is reduced) from the current state (i.e., whether the touched button is the "-" button). If the touched button is the "-" button and the determination of step 332 is satisfied, the processing unit 64 shifts to step 333 in which the scaling-factor of the screen display image is decreased to reduce the image on the display screen 101 in accordance with the predetermined program. The amount of scale-down performed at that time is, e.g., about 5% in comparison with the current scaling factor. As a result, an area larger than the area having been displayed so far is now displayed on the display screen 101 in reduced scale. After the process of step 333 has been executed, or if the determination of step 331 is not satisfied, the processing unit 64 brings the procedure of Fig. 28 to the end.

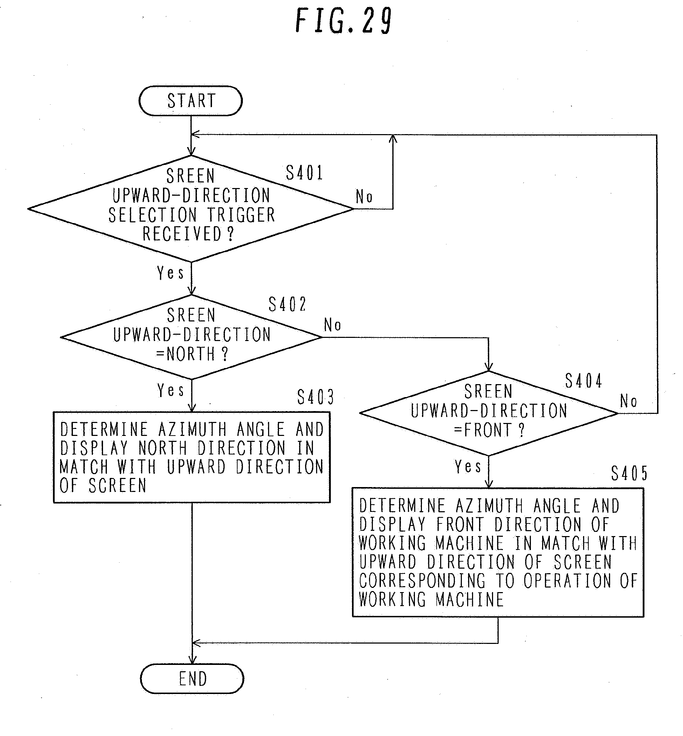

Fig. 29 is a flowchart showing the processing procedure in the screen upward-direction setting process (step 400).

In the screen upward-direction setting process, the processing unit 64 first determines in step 401 whether the screen upward-direction selection button 112 is touched and a screen upward-direction selection trigger is received from the display unit 63. If the screen upward-direction selection trigger is not inputted and the determination of step 401 is not satisfied, the processing unit 64 repeats the procedure of step 401. If the input of the screen upward-direction selection trigger is confirmed and the determination of step 401 is satisfied, the processing unit 64 shifts the procedure to step 402.

In step 402, the processing unit 64 determines whether the received screen upward-direction selection trigger instructs such a selection that the upward direction of the screen is set to north. If the north direction is selected as the direction to be aligned with the upward direction of the screen and the determination of step 402 is satisfied, the processing unit 64 determines an azimuth angle in accordance with the previously stored program and outputs a display signal for displaying the actual north direction in match with the upward direction of the screen to the display unit 63 in step 403. As a result, the display mode of the display screen 101 is set as described above with reference to Fig. 8. On the other hand, if the determination of step 402 is not satisfied, the processing unit 64 shifts the procedure to step 404.

In step 404, the processing unit 64 determines whether the received screen upward-direction selection trigger instructs such a selection that the upward direction of the screen is set to be the front direction. If the front direction of the working machine is selected as the direction to be aligned with the upward direction of the screen and the determination of step 404 is satisfied, the processing unit 64 determines an azimuth angle in accordance with the previously stored program and outputs a display signal for displaying the front direction of the cab 32 of the working machine in match with the upward direction of the screen to the display unit 63 in step 405. As a result, the display mode of the display screen 101 is set as described above with reference to Fig. 9. After the process of step 403 or 405 has been executed, the processing unit 64 brings the procedure of Fig. 29 to the end.

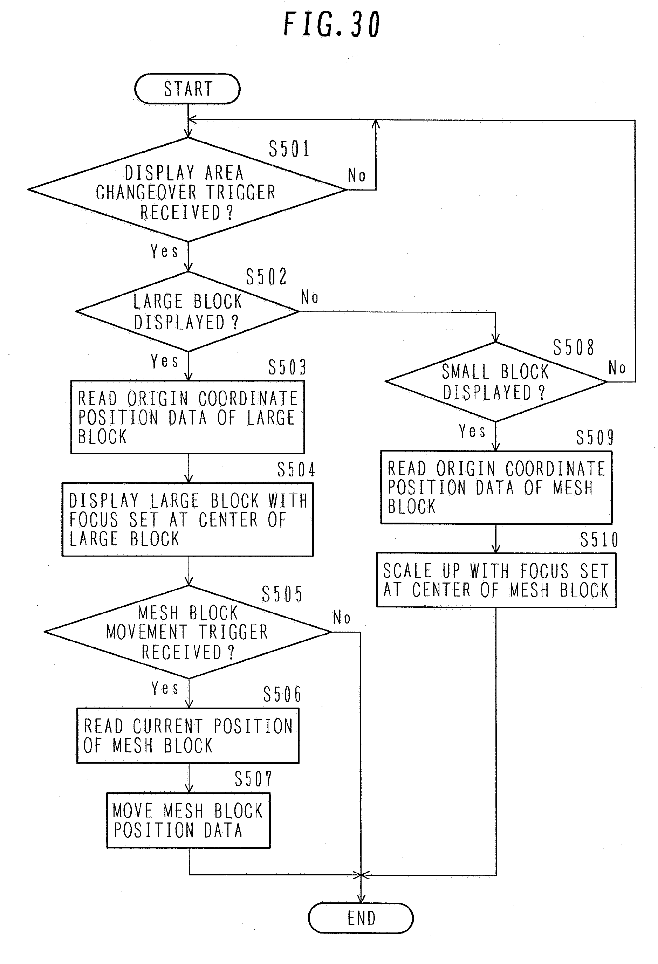

Fig. 30 is a flowchart showing the processing procedure in the display area setting process (step 500).

In the display area setting process, the processing unit 64 first determines in step 501 whether the display area selection button 113 is touched and a display area changeover trigger is received from the display unit 63. If the display area changeover trigger is not inputted and the determination of step 501 is not satisfied, the processing unit 64 repeats the procedure of step 501. If the input of the display area changeover trigger is confirmed and the determination of step 501 is satisfied, the processing unit 64 shifts the procedure to step 502.

In step 502, the processing unit 64 determines whether the received display area changeover trigger instructs the large block display mode. If the large block display mode is selected and the determination of step 502 is satisfied, the processing unit 64 reads the origin coordinates of the large block in step 503, which is stored in the object file, and displays the whole of the large block on the display screen 101 in subsequent step 504 while the focus is set in match with the center of the large block (see Fig. 2).

After shifting the procedure to step 505, the processing unit 64 determines whether any small block in the displayed large block is touched and a mesh block movement trigger is received from the display unit 63. If the mesh block movement trigger is inputted and the determination of step 505 is satisfied, the processing unit 64 shifts the procedure to step 506 and reads the current position of the mesh block 105. In subsequent step 507, the position to which is to be moved the mesh block is calculated depending on the operation of touching the small block as described above with reference to Figs. 15-22. The processing unit 64 outputs a display signal, which is produced based on the calculation result, to the display unit 63, whereby the mesh block is displayed on the display screen 101 in the moved position.

On the other hand, if the determination of step 502 is not satisfied, the processing unit 64 shifts the procedure to step 508 and determines whether the received display area changeover trigger instructs the small block display mode. If the small block display mode is not selected and the determination of step 508 is not satisfied, the processing unit 64 returns the procedure to step 501. For example, if the display area changeover trigger instructs the whole display mode, the processing unit 64 instructs the corresponding display mode to the display unit 63 after executing the process of step 508, followed by returning the procedure to step 501.

If the display area changeover trigger instructs the small block display mode and the determination of step 508 is satisfied, the processing unit 64 reads the origin coordinates of the small block (current mesh block) in step 509, which is stored in the object file, and displays the whole of the mesh block on the display screen 101 in subsequent step 510 while the focus is set in match with the center of the mesh block and the scaling factor of the displayed image is increased (see Figs. 8 and 9).

After the procedure of step 507 or 510 has been executed, or the determination of step 505 is not satisfied, the processing unit 64 brings the procedure of Fig. 30 to the end.

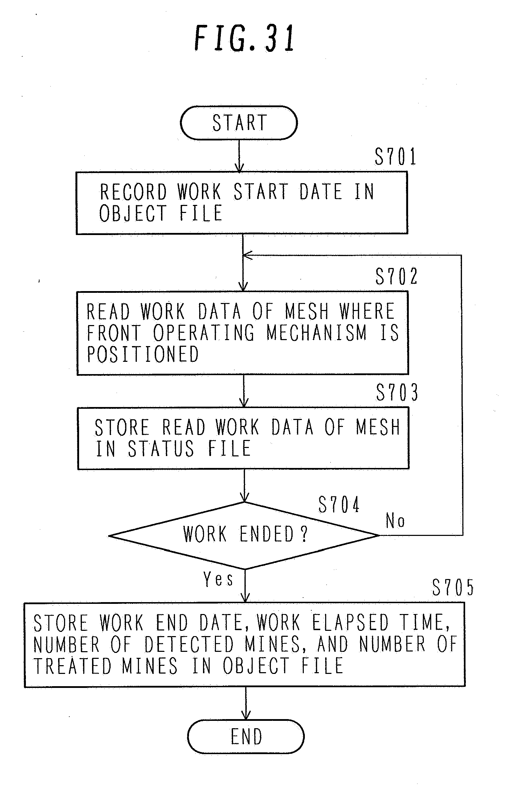

Fig. 31 is a flowchart showing the processing procedure in the work data recording/updating process (step 700).

In the work data recording/updating process, the processing unit 64 records, e.g., the work start date in the object file in step 701 when the work is started. During the work, the processing unit 64 obtains, in step 702, work data regarding the work situation in the mesh where the front operating mechanism is positioned, and in step 703, it successively records the obtained work data, as required, in the status file shown in Fig. 13. Thereafter, the processing unit 64 determines whether the application end button 117 is touched and the end of work is instructed (step 704). If the determination of step 704 is not satisfied, the processing unit 64 returns the procedure to step 702 and repeats the procedure of steps 702 and 703. If the determination of step 704 is satisfied, the processing unit 64 records the work end date, the work elapsed time, the work performance (including the number of detected mines and the number of treated mines), etc. in the object file, followed by bringing the procedure of Fig. 31 to the end.

### <Advantages in Operation>

According to the above-described work management system of the embodiment, once the work area setting process (step 200 in Fig. 23) is finished, the positional relationship between the working machine symbol 100 and the large block 103 can be easily confirmed on the display screen 101 by selecting the working machine subject-display mode even in the case of the working machine being away from the work target area such as when the working machine is run toward the work target area from the office on the next day of work. Therefore, the operator can go to the work target area along an optimum path. Also, when the topography subject-display mode is selected, the scaling factor of the displayed image and the focus position can be optionally set as required, and the state in the point to be confirmed can be displayed in a manner flexibly adapted for the operator's demands.

If the work target area is entirely displayed in the form of meshes, the displayed image is so complicated as to raise a difficulty in confirming work situations on a work monitor in some cases. In contrast, according to the present invention, by displaying the work state in units of the small block when the large block display mode is selected, the operator can confirm the work state within the large block in a rough manner. Also, since only the mesh block 105 having the same area as that of one small block can be optionally selected and displayed in units of mesh even in the large block display mode, it is possible to successively confirm the detailed work state of each desired small block by moving the mesh block as required, and to realize high convenience in the viewpoint of confirming the order of subsequent work steps as well.

In the case of the absolute azimuth display mode in which the north direction is fixedly set in match with the upward direction of the work monitor, when the operator progresses fine work in the small block, for example, the operator may face a difficulty in keeping correct sense of direction and properly progressing the work because the direction of advance of the working machine viewed by the operator on the display screen differs from the actual direction of advance of the working machine except for when the direction of advance of the working machine is oriented north. Such a difficulty may lead to a risk of malfunction due to erroneous recognition of direction. However, the embodiment can selectively display the image not only in the absolute azimuth display mode, but also in the relative azimuth display mode in which the positional relationship is displayed with respect to the surrounding topography as viewed from the operator's eyes at all times while the front direction of the cab is set to be correspondent to the upward direction of the screen. Accordingly, the operator can progress the work while looking at the work monitor screen which displays the image in the mode close to the operator's sense of direction.

Thus, according to the embodiment, since the work management system is adaptable for various display modes demanded by the operator, it is possible to greatly improve workability and operability, and to increase working efficiency.

If the large block is entirely displayed in the form of meshes when the large block display mode is selected, a large amount of display data has to be processed and a computer having a superior processing speed and a large storage capacity is required in order to successively display the work situations on the work monitor screen, thus resulting in an increase of the system cost. In contrast, according to the embodiment, since only the selected mesh block is displayed in the form of meshes when the large block display mode is selected, the amount of display data can be suppressed to a minimum and even a relatively , inexpensive computer is sufficiently adaptable for executing the processing required in practical use. Thus, the system cost can be reduced.

While the embodiment has been described, by way of example, in connection with the case where the work management system of the present invention is applied to operation management of the mine removing machine, the present invention can also be suitably applied to the case where the operator manages and confirms the work state in each position within the work target area in other various kinds of work carried out in a particular work target region, including ground amendment work for adding and mixing a solidifier to the ground and increasing hardness of the ground by using a soil conditioning machine, stabilizer or the like, topographic change work for modifying a landform to a desired shape by using a hydraulic excavator or the like, roller compacting work for compacting the ground by using a vibrating roller or the like, and dredging work.

## Claims

1. A work management system (50) for managing work situations of a working machine (30), said work management system (50) comprising:
a radio unit (51) for receiving correction data from a base station (10);
GPS receivers (53, 54) for calculating positions of a plurality of GPS antennas (46, 47), which are installed on said working machine (30), based on the correction data received through said radio unit (51) and a signal from a GPS satellite (20);
various movable-portion sensors (55) for detecting work data of said working machine (30);
a processing unit (64) for calculating the progress of work in a work target area and the position and attitude of said working machine (30) based on position data from said GPS receivers (53, 54) and the work data from said various movable-portion sensors (55);
a display unit (63) installed in a cab (32) of said working machine (30), receiving a display signal from said processing unit (64), and displaying the progress of work in the work target area and the position and attitude of said working machine (30) in superimposed relation; and
display subject changeover means (110) for selectively changing over a working machine subject-display mode in which a working machine symbol (100) is displayed as a subject on a screen (101) of said display unit (63) and the work target area is moved corresponding to movement of said working machine (30), and a topography subject-display mode in which an optionally selected position of topography is fixedly displayed at a center of the screen (101) and the working machine symbol (100) is moved with respect to the fixedly displayed work target area.

2. The work management system (50) according to Claim 1, wherein the working machine subject-display mode has the function of automatically optimizing a scaling factor of a screen display image and a focus position depending on a distance between said working machine (30) and the work target area such that the work target area and the working machine symbol (100) fall in the screen (101).

3. The work management system (50) according to Claim 1 or 2, further comprising scaling-factor change means (115) for manually changing the scaling factor of the screen display image when the topography subject-display mode is selected.

4. The work management system (50) according to any one of Claims 1 to 3, further comprising display position moving means (116) for manually moving the optionally selected position fixed to the center of the screen (101) when the topography subject-display mode is selected.

5. The work management system (50) according to any one of Claims 1 to 4, further comprising display direction changeover means (112) for selectively changing over an absolute azimuth display mode in which the work target area is displayed while orientation thereof is fixed with the upper side of the screen (101) of said display unit (63) being set correspondent to north, and a relative azimuth display mode in which the working machine symbol (100) is displayed while orientation thereof is fixed with the upper side of the screen (101) of said display unit (63) being set correspondent to the front direction of said working machine (30).

6. The work management system (50) according to any one of Claims 1 to 5, further comprising display area changeover means (113) for selectively changing over a large block display mode in which the work target area is expressed by a large block (102) given as an assembly of small blocks (103) each made up of meshes (104) as component units and the whole of the large block (102) is displayed on the screen (101) of said display unit (63) with the small block (103) being a unit for display, and a small block display mode in which one desired small block (103) is displayed with the mesh (104) being a unit for display; and
mesh block moving means (101) for, when the large block display mode is selected, optionally moving a mesh block (105) which displays a work state of a region corresponding to one small block (103) in the form of meshes, and displaying the work state in a desired position without making changeover to the small block display mode.

7. A work management system (50) for managing work situations of a working machine (30), said work management system (50) comprising:
a radio unit (51) for receiving correction data from a base station (10);
GPS receivers (53, 54) for calculating positions of a plurality of GPS antennas (46, 47), which are installed on said working machine (30), based on the correction data received through said radio unit (51) and a signal from a GPS satellite (20);
various movable-portion sensors (55) for detecting work data of said working machine (30);
a processing unit (64) for calculating the progress of work in a work target area and the position and attitude of said working machine (30) based on position data from said GPS receivers (53, 54) and the work data from said various movable-portion sensors (55);
a display unit (63) installed in a cab (32) of said working machine (30), receiving a display signal from said processing unit (64), and displaying the progress of work in the work target area and the position and attitude of said working machine (30) in superimposed relation;
display area changeover means (113) for selectively changing over a large block display mode in which the work target area is expressed by a large block (102) given as an assembly of small blocks (103) each made up of meshes (104) as component units and the whole of the large block (102) is displayed on the screen (101) of said display unit (63) with the small block (103) being a unit for display, and a small block display mode in which one desired small block (103) is displayed with the mesh (104) being a unit for display; and
mesh block moving means (101) for, when the large block display mode is selected, optionally moving a mesh block (105) which displays a work state of a region corresponding to one small block (103) in the form of meshes, and displaying the work state in a desired position without making changeover to the small block display mode.

8. A working machine (30) comprising:
a radio unit (51) for receiving correction data from a base station (10);
a plurality of GPS antennas (46, 47) for receiving a signal from a GPS satellite (20);
GPS receivers (53, 54) for calculating positions of the plurality of GPS antennas (46, 47) based on the correction data received through said radio unit (51) and a signal from said GPS satellite (20);
various movable-portion sensors (55) for detecting work data;
a processing unit (64) for calculating the progress of work in a work target area and the current machine position and attitude based on position data from said GPS receivers (53, 54) and the work data from said various movable-portion sensors (55);
a display unit (63) installed in a cab (32), receiving a display signal from said processing unit (64), and displaying the progress of work in the work target area and the current machine position and attitude in superimposed relation; and
display subject changeover means (110) for selectively changing over a working machine subject-display mode in which a working machine symbol (100) is displayed as a subject on a screen (101) of said display unit (63) and the work target area is moved corresponding to movement of a machine body, and a topography subject-display mode in which an optionally selected position of topography is fixedly displayed at a center of the screen (101) and the working machine symbol (100) is moved with respect to the fixedly displayed work target area.

9. A working machine (30) comprising:
a radio unit (51) for receiving correction data from a base station (10);
a plurality of GPS antennas (46, 47) for receiving a signal from a GPS satellite (20);
GPS receivers (53, 54) for calculating positions of the plurality of GPS antennas (46, 47) based on the correction data received through said radio unit (51) and a signal from said GPS satellite (20);
various movable-portion sensors (55) for detecting work data;
a processing unit (64) for calculating the progress of work in a work target area and the current machine position and attitude based on position data from said GPS receivers (53, 54) and the work data from said various movable-portion sensors (55);
a display unit (63) installed in a cab (32), receiving a display signal from said processing unit (64), and displaying the progress of work in the work target area and the current machine position and attitude in superimposed relation;
display area changeover means (113) for selectively changing over a large block display mode in which the work target area is expressed by a large block (102) given as an assembly of small blocks (103) each made up of meshes (104) as component units and the whole of the large block (102) is displayed on the screen (101) of said display unit (63) with the small block (103) being a unit for display, and a small block display mode in which one desired small block (103) is displayed with the mesh (104) being a unit for display; and
mesh block moving means (101) for, when the large block display mode is selected, optionally moving a mesh block (105) which displays a work state of a region corresponding to one small block (103) in the form of meshes, and displaying the work state in a desired position without making changeover to the small block display mode.

## Amended claims

### Amended claims under Art. 19.1 PCT

**1.** amended) A work management system (50) for managing work situations of a working machine (30), said work management system (50) comprising:
a radio unit (51) for receiving correction data from a base station (10);
GPS receivers (53, 54) for calculating positions of a plurality of GPS antennas (46, 47), which are installed on said working machine (30), based on the correction data received through said radio unit (51) and a signal from a GPS satellite (20);
various movable-portion sensors (55) for detecting work data of said working machine (30);
a processing unit (64) for calculating the progress of work in a work target area and the position and attitude of said working machine (30) based on position data from said GPS receivers (53, 54) and the work data from said various movable-portion sensors (55);
a display unit (63) installed in a cab (32) of said working machine (30), receiving a display signal from said processing unit (64), and displaying the progress of work in the work target area and the position and attitude of said working machine (30) in superimposed relation; and
display subject changeover means (110) for selectively changing over a working machine subject-display mode in which a working machine symbol (100) is displayed as a subject on a screen (101) of said display unit (63) and the work target area is moved corresponding to movement of said working machine (30), and a topography subject-display mode in which an optionally selected position of topography is fixedly displayed at a center of the screen (101) and the working machine symbol (100) is moved with respect to the fixedly displayed work target area,
the working machine subject-display mode having the function of automatically optimizing a scaling factor of a screen display image and a focus position depending on a distance between said working machine (30) and the work target area such that the work target area and the working machine symbol (100) fall in the screen (101).

**2.** amended) The work management system (50) according to Claim 1, further comprising scaling-factor change means (115) for manually changing the scaling factor of the screen display image when the topography subject-display mode is selected.

**3.** amended) The work management system (50) according to Claim 1 or 2, further comprising display position moving means (116) for manually moving the optionally selected position fixed to the center of the screen (101) when the topography subject-display mode is selected.

**4.** amended) The work management system (50) according to Claim 2, further comprising display direction changeover means (112) for selectively changing over an absolute azimuth display mode in which the work target area is displayed while orientation thereof is fixed with the upper side of the screen (101) of said display unit (63) being set correspondent to north, and a relative azimuth display mode in which the working machine symbol (100) is displayed while orientation thereof is fixed with the upper side of the screen (101) of said display unit (63) being set correspondent to the front direction of said working machine (30).

**5.** amended) The work management system (50) according to any one of Claims 1 to 4 further comprising display area changeover means (113) for selectively changing over a large block display mode in which the work target area is expressed by a large block (102) given as an assembly of small blocks (103) each made up of meshes (104) as component units and the whole of the large block (102) is displayed on the screen (101) of said display unit (63) with the small block (103) being a unit for display, and a small block display mode in which one desired small block (103) is displayed with the mesh (104) being a unit for display; and mesh block moving means (101) for, when the large block display mode is selected, optionally moving a mesh block (105) which displays a work state of a region corresponding to one small block (103) in the form of meshes, and displaying the work state in a desired position without making changeover to the small block display mode.

**7.** deleted)

**6.** amended) A working machine (30) comprising:
a radio unit (51) for receiving correction data from a base station (10);
a plurality of GPS antennas (46, 47) for receiving a signal from a GPS satellite (20);
GPS receivers (53, 54) for calculating positions of the plurality of GPS antennas (46, 47) based on the correction data received through said radio unit (51) and a signal from said GPS satellite (20);
various movable-portion sensors (55) for detecting work data;
a processing unit (64) for calculating the progress of work in a work target area and the current machine position and attitude based on position data from said GPS receivers (53, 54) and the work data from said various movable-portion sensors (55);
a display unit (63) installed in a cab (32), receiving a display signal from said processing unit (64), and displaying the progress of work in the work target area and the current machine position and attitude in superimposed relation; and
display subject changeover means (110) for selectively changing over a working machine subject-display mode in which a working machine symbol (100) is displayed as a subject on a screen (101) of said display unit (63) and the work target area is moved corresponding to movement of a machine body, and a topography subject-display mode in which an optionally selected position of topography is fixedly displayed at a center of the screen (101) and the working machine symbol (100) is moved with respect to the fixedly displayed work target area,
the working machine subject-display mode having the function of automatically optimizing a scaling factor of a screen display image and a focus position depending on a distance between said working machine (30) and the work target area such that the work target area and the working machine symbol (100) fall in the screen (101).

**9.** deleted)
